# EUROPEAN PATENT SPECIFICATION

(11) **EP 3 247 063 B1**
(45) Date of publication and mention of the grant of the patent: **03.06.2020**
(21) Application number: 15879452.9
(22) Date of filing: 30.01.2015
(51) Int. Cl.: H04L 1/00

(54) **NETWORK DEVICE, USER EQUIPMENT, AND SYSTEM MESSAGE TRANSMISSION METHOD**
NETZWERKVORRICHTUNG, BENUTZERGERÄT UND SYSTEMNACHRICHTENÜBERTRAGUNGSVERFAHREN
DISPOSITIF DE RÉSEAU, ÉQUIPEMENT D'UTILISATEUR ET PROCÉDÉ D'ÉMISSION DE MESSAGES DE SYSTÈME

(43) Date of publication of application: 22.11.2017
(73) Proprietor: Huawei Technologies Co., Ltd., Longgang District Shenzhen, Guangdong 518129 (CN)
(72) Inventor: HUA, Meng, Shenzhen Guangdong 518129 (CN); HU, Wenquan, Shenzhen Guangdong 518129 (CN); TIE, Xiaolei, Shenzhen Guangdong 518129 (CN)
(74) Representative: Epping - Hermann - Fischer
(86) International application number: PCT/CN2015/072018
(87) International publication number: WO 2016/119244

(56) References cited:
- WO-A1-2014/069944
- WO-A1-2015/012654
- CN-A- 103 959 878
- CN-A- 104 219 767
- US-A1- 2014 301 305
- SAMSUNG: "Signaling and Design for SCH, PBCH, and PRACH", 3GPP DRAFT; R1-144736 SCH_PBCH_RA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 17 November 2014 (2014-11-17), XP050875814, Retrieved from the Internet: URL:http://www.3gpp.org/ftp/Meetings_3GPP_ SYNC/RAN1/Docs/ [retrieved on 2014-11-17]
- NEC: "Coverage enhancement for Rel-13 low complexity UEs", 3GPP DRAFT; R1-144860 COVERAGE ENHANCEMENT FOR REL-13 LOW COMPLEXITY UES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. San Francisco, USA; 20141117 - 20141121 17 November 2014 (2014-11-17), XP050875922, Retrieved from the Internet: URL:http://www.3gpp.org/ftp/Meetings_3GPP_ SYNC/RAN1/Docs/ [retrieved on 2014-11-17]
- LG ELECTRONICS: 'Further Consideration Points for Provision of MTC UEs' 3GPP TSG RANWG1 #73 R1-132234, [Online] 11 May 2013, pages 1 - 3, XP050698006 Retrieved from the Internet: <URL:HTTP://WWW.3GPP.ORG/FTP/TSG_RAN/WG1_RL 1/TSGR1_73/DOCS/>
- ERICSSON: 'SIB Transmission for MTC' 3GPP TSG-RAN WG1 MEETING #79 R1-144563, [Online] 08 November 2014, pages 1 - 7, XP050885272 Retrieved from the Internet: <URL:HTTP://WWW.3GPP.ORG/FTP/TSG_RAN/WG1_RL 1/TSGR1_79/DOCS/>

## Description

### TECHNICAL FIELD

The present invention relates to wireless communications technologies, and in particular, to a network device, user equipment, and a system information transmission method.

### BACKGROUND

In a wireless communications system, before accessing a network, user equipment (UE) first needs to read system information to obtain necessary system and common channel configuration information, so as to facilitate access to the network when a service is initiated. Generally, system information is sent by a network device, such as a base station or a base station controller, to all UEs in a cell in a broadcast manner. For example, in a Long Term Evolution (LTE) system, an evolved NodeB (eNB) sends system information to UEs over a physical broadcast channel (PBCH).

According to an existing LTE protocol, a physical channel PBCH carries 24 information bits in a broadcast channel (BCH) that acts as a transmission channel. The 24 information bits include 14 bits of master information block (MIB) information. The MIB information includes three bits of information used to indicate downlink system bandwidth, three bits of information used to indicate physical hybrid ARQ indicator channel (PHICH) configuration, and eight bits of information used to indicate an SFN number (other two bits of information of the SFN are obtained by means of PBCH detection). The rest ten bits are reserved bits.

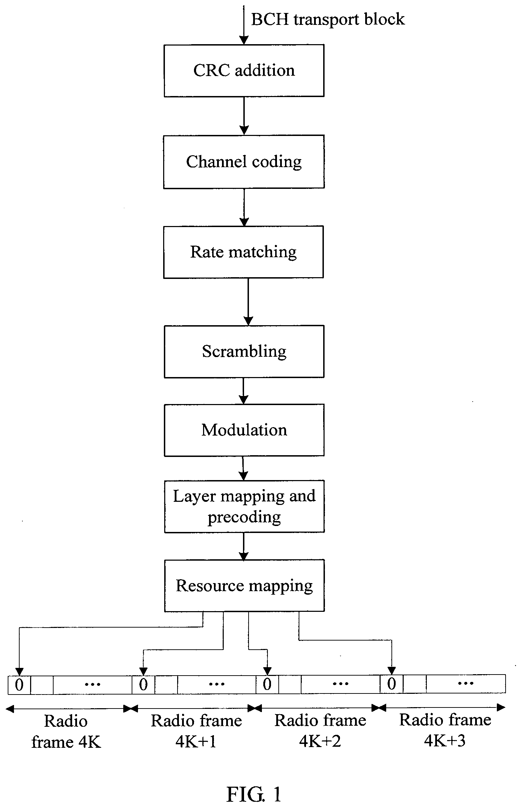

As shown in FIG. 1, during actual system information transmission in an LTE system, by means of cyclic redundancy code (CRC) addition, channel coding, rate matching, scrambling, modulation, precoding and layer mapping, and resource mapping, a BCH transport block is finally mapped to four radio frames for transmission, that is, mapped to radio frames 4K, 4K+1, 4K+2, and 4K+3 for transmission, where K is a non-negative integer. According to an LTE protocol, duration of one radio frame is 10 ms. Therefore, a broadcast period of the system information is 40 ms.

The resource mapping in FIG. 1 implements mapping of data to actual physical resources. According to the existing LTE protocol, PBCHs are transmitted on the middle 72 subcarriers of the first four symbols in the second timeslot (slot) of the 0^{th} subframe of each radio frame. To support development of future machine-to-machine (M2M) services, a deployment environment for machine type communication (MTC) UE needs to be considered. A large quantity of MTC UEs are to be deployed in basements, high buildings, remote areas, and the like where coupling losses are relatively large. This type of UE generally does not require a relatively high data rate, can tolerate a service delay, and seldom moves. There are also a large quantity of MTC UEs that are deployed on ground surfaces where coupling losses are low, at locations relatively close to a base station, and the like. Currently, a common practice is to send system information according to a receiving requirement of UE that has a large coupling loss, that is, UE whose receiving performance is the poorest. This requires occupation of a relatively large quantity of system resources, for example, a relatively large quantity of time-frequency symbols in an LTE system.

To sum up, currently, there is still no high-efficiency system information sending solution that can meet receiving requirements of UEs of different coverage grades in a cell and reduce occupation of system resources.

WO 2014/069944 A1 discloses a method and apparatus for transmitting/receiving data in a wireless communication system. The method includes: a terminal transmitting a coverage enhancement request or capability information for the terminal; a base station determining a channel setting for the terminal based on the transmitted request or information; and transmitting downlink data and performing random access on the basis of the determined channel setting. Namely, a scheme for adaptively transmitting and receiving data in consideration of the coverage of the terminal is proposed.

WO 2015/012654 A1 discloses a method and apparatus for coverage enhancement. The method includes detecting a cell with primary synchronization signal (PSS) and/or secondary synchronization signal (SSS), detecting reference signal based on the detected synchronization signal, detecting broadcasting channel based on the detected reference signal and decoding master information block on the broadcasting channel, detecting system information block on a downlink data channel, transmitting random access preamble on random access channel based on a system information obtained from the system information block and receiving random access response corresponding to the random access preamble. US 2014/0301305 A1 discusses techniques and apparatus for physical broadcast channel (PBCH) coverage enhancements, for example, for machine type communications (MTC). In aspects, the PBCH coverage enhancements may be applied by non-MTC devices. A method for wireless communications typically performed by a base station (BS) is provided. The method generally includes determining a set of resources for a new physical broadcast channel (PBCH) with enhanced coverage relative to a legacy PBCH and communicating to at least one user equipment (UE) based on the determined set of resources for the new PBCH. In aspects, the new PBCH may be transmitted on a subframe allocated for communicating with MTC devices (MTC subframe).

SAMSUNG: "Signaling and Design for SCH, PBCH, and PRACH", 3GPP DRAFT; R1-144736 SCH_PBCH_RA, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. San Francisco, USA; 20141117-20141121 17 November 2014 (2014-11-17), considers the effects of the operational characteristics for Rel-13 low cost UEs on the Coverage Enhancement (CE) requirements and power consumption regarding SCH/PBCH receptions and PRACH transmission.

NEC: "Coverage enhancement for Rel-13 low complexity UEs", 3GPP DRAFT; R1-144860 COVERAGE ENHANCEMENT FOR REL-13 LOW COMPLEXITY UES, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX, vol. RAN WG1, no. San Francisco, USA; 20141117-20141121 17 November 2014 (2014-11-17), discusses the coverage enhancement target and techniques for Rel-13 low complexity UEs and provides some observations and proposals.

### SUMMARY

Embodiments of the present invention provide a network device, user equipment, a system information transmission method and a system information receiving method according to the appended independent claims, so as to provide a system information sending solution that can meet receiving requirements of user equipments of different coverage grades within a cell and reduce occupation of system resources. Further embodiments are defined by the dependent claims. Embodiments described herein which are not covered by the claims may serve a examples useful for understanding the invention.

According to a first aspect, an embodiment of the present invention provides a network device, including:
a processing module, configured to obtain pieces of system information corresponding to N coverage grades within a coverage area of a cell, where a coverage grade G_i corresponds to a piece of system information S_i in the pieces of system information, wherein the system information S_i is different from a piece of system information S_j, where
the system information S_j is a piece of system information corresponding to any coverage grade G_j in the N coverage grades other than the coverage grade G_i, 1≤j≤N, and i≠j; and
a sending module, configured to send the pieces of system information over a target channel by using different sending parameters, where the sending parameter used to send the system information S_i is a physical-layer parameter and/or a higher-layer parameter that are/is used by the sending module when user equipment belonging to the coverage grade G_i is enabled to reliably receive the system information S_i over the target channel; where i and N are positive integers, and 1≤i≤N;
wherein the system information S_i comprises a diff_i and a comm, wherein:
   the diff_i is a piece of partial system information obtained by the processing module for the coverage grade G_i; and
   the comm is a piece of common-content partial system information for the system information S_i and the system information S_j;
   wherein the comm is sent over the target channel by using a first sending parameter, wherein the first sending parameter is a physical-layer parameter and/or a higher-layer parameter that are/is used by the sending module when user equipment belonging to a coverage grade G_n is enabled to reliably receive the comm over the target channel;
   the diff_i is sent over the target channel by using a second sending parameter, wherein the second sending parameter is a physical-layer parameter and/or a higher-layer parameter that are/is used by the sending module when the user equipment belonging to the coverage grade G_i is enabled to reliably receive the diff_i over the target channel.

With reference to the first aspect, in a first possible implementation, the pieces of system information are sent by the sending module in a time division multiplexing or frequency division multiplexing manner.

With reference to the first aspect, in a second possible implementation, the sending module is specifically configured to:
in one system information sending process, send M+1 pieces of partial system information including M pieces of partial system information of the N diff_i's and the comm; where:
M is a positive integer that is not greater than N; and among coverage grades corresponding to the M pieces of partial system information, receiving performance of the user equipment belonging to the coverage grade G_n is the poorest in the cell.

With reference to the third possible implementation of the first aspect, in a fourth possible implementation, the sending module is specifically configured to:
in L consecutive system information sending processes, complete sending the pieces of system information obtained by the processing module that are corresponding to the N coverage grades within the coverage area of the cell, where L is a positive integer, and in the L consecutive system information sending processes, a smaller i indicates more times that the diff_i is sent.

With reference to any one of the first aspect, or the first to the second possible implementations of the first aspect, the physical-layer parameter and/or the higher-layer parameter include/includes at least one of the following parameters:
a bandwidth, a frequency, a transmit power, a modulation and coding scheme MCS, a spreading factor SF, a quantity of repetitions, or a time length.

According to a second aspect, an embodiment of the present invention provides user equipment, including:
a processing module, configured to: determine, by means of downlink measurement, a coverage grade G_spec to which the user equipment belongs among N coverage grades {G_i|1≤i≤N} within a coverage area of a cell, where i is a positive integer, and N is an integer greater than 1; and determine, according to a preset correspondence between the G_spec and a system information sending parameter of the cell, a target sending parameter corresponding to the G_spec; and
a receiving module, configured to receive, over a target channel in a receiving manner that matches the target sending parameter, a piece of system information S_spec sent by a network device serving the cell, where the system information S_spec includes a diff spec and a comm, where the diff_spec is a piece of partial system information sent by the network device for the coverage grade G_spec within the cell, and the comm is a piece of common-content partial system information that is sent by the network device to user equipments belonging to different coverage grades within the cell; and
the target sending parameter includes a first sending parameter and a second sending parameter, where the first sending parameter is a physical-layer parameter and/or a higher-layer parameter that are/is used when the network device sends the comm to the user equipment belonging to the coverage grade G_spec within the cell, and the second sending parameter is a physical-layer parameter and/or a higher-layer parameter that are/is used when the network device sends the diff_spec; where
the target sending parameter is a physical-layer parameter and/or a higher-layer parameter that are/is used by the network device when user equipment belonging to the coverage grade G_spec within the cell is enabled to reliably receive the system information S_spec over the target channel.

With reference to the second aspect, in a first possible implementation,
the system information S_spec includes a diff_spec and a comm, where the diff_spec is a piece of partial system information sent by the network device for the coverage grade G_spec within the cell, and the comm is a piece of common-content partial system information that is sent by the network device to user equipments belonging to different coverage grades within the cell;
the target sending parameter includes a first sending parameter, where the first sending parameter is a physical-layer parameter and/or a higher-layer parameter that are/is used when the network device sends the comm to the user equipment belonging to the coverage grade G_spec within the cell; and
the receiving module is specifically configured to:
   receive the comm over the target channel in a receiving manner that matches the first sending parameter;
   obtain a second sending parameter carried by the comm, where the second sending parameter is a physical-layer parameter and/or a higher-layer parameter that are/is used when the network device sends the diff_spec within the cell; and
   receive the diff_spec over the target channel in a receiving manner that matches the second sending parameter.

With reference to the first possible implementation of the second aspect, in a second possible implementation, the receiving module is specifically configured to:
determine a receipt instance receipt_instance_spec for the system information S_spec;
at a first time offset location in a system information receiving process corresponding to the determined receipt_instance_spec, receive the comm over the target channel in the receiving manner that matches the first sending parameter; and
at a second time offset location in the system information receiving process corresponding to the determined receipt_instance_spec, receive the diff_spec over the target channel in the receiving manner that matches the second sending parameter.

With reference to the first possible implementation of the second aspect, in a third possible implementation, the receiving module is specifically configured to:
determine a receipt instance receipt_instance_spec for the system information S_spec;
at a first frequency in a system information receiving process corresponding to the determined receipt_instance_spec, receive the comm over the target channel in the receiving manner that matches the first sending parameter; and
at a second frequency in the system information receiving process corresponding to the determined receipt_instance_spec, receive the diff_spec over the target channel in the receiving manner that matches the second sending parameter.

With reference to any one of the second aspect, or the first to the third possible implementations of the second aspect, in a fifth possible implementation, the physical-layer parameter and/or the higher-layer parameter include/includes at least one of the following parameters:
a bandwidth, a frequency, a transmit power, a modulation and coding scheme MCS, a spreading factor SF, or a quantity of repetitions.

According to a third aspect, an embodiment of the present invention provides a system information sending method, including:
obtaining, by a network device, pieces of system information corresponding to N coverage grades within a coverage area of a cell, where a coverage grade G_i corresponds to a piece of system information S_i in the pieces of system information, wherein the system information S_i is different from a piece of system information S_j, where
the system information S_j is a piece of system information corresponding to any coverage grade G_j in the N coverage grades other than the coverage grade G_i, 1≤j≤N, and i≠j; and
sending, by the network device, the pieces of system information over a target channel by using different sending parameters, where the sending parameter used to send the system information S_i is a physical-layer parameter and/or a higher-layer parameter that are/is used by the network device when user equipment belonging to the coverage grade G_i is enabled to reliably receive the system information S_i over the target channel; where
i and N are positive integers, and 1≤i≤N;
wherein the system information S_i comprises a diff_i and a comm, wherein:
   the diff_i is a piece of partial system information obtained by the network device for the coverage grade G_i; and
   the comm is a piece of common-content partial system information for the system information S_i and the system information S_j;
   wherein the comm is sent over the target channel by using a first sending parameter, wherein the first sending parameter is a physical-layer parameter and/or a higher-layer parameter that are/is used by network device when user equipment belonging to a coverage grade G_n is enabled to reliably receive the comm over the target channel;
   the diff_i is sent over the target channel by using a second sending parameter, wherein the second sending parameter is a physical-layer parameter and/or a higher-layer parameter that are/is used by the network device when the user equipment belonging to the coverage grade G_i is enabled to reliably receive the diff_i over the target channel.

With reference to the third aspect, in a first possible implementation, the pieces of system information are sent by the network device in a time division multiplexing or frequency division multiplexing manner.

With reference to the third aspect or the first possible implementation of the third aspect, in a second possible implementation, the sending the pieces of system information over a target channel by using different sending parameters includes:
in one system information sending process, send M+1 pieces of partial system information including M pieces of partial system information of the N diff_i's and the comm; where:M is a positive integer that is not greater than N; and among coverage grades corresponding to the M pieces of partial system information, receiving performance of the user equipment belonging to the coverage grade G_n is the poorest in the cell. With reference to the second possible implementation of the third aspect, in a third possible implementation, the sending the pieces of system information over a target channel by using different sending parameters includes:
in L consecutive system information sending processes, completing sending the obtained pieces of system information corresponding to the N coverage grades within the coverage area of the cell, where L is a positive integer, and in the L consecutive system information sending processes, a smaller i indicates more times that the diff_i is sent.

With reference to any one of the third aspect, or the first to the fifth possible implementations of the third aspect, the physical-layer parameter and/or the higher-layer parameter include/includes at least one of the following parameters:
a bandwidth, a frequency, a transmit power, a modulation and coding scheme MCS, a spreading factor SF, a quantity of repetitions, or a time length.

According to a fourth aspect, an embodiment of the present invention provides a system information receiving method, including:
determining, by user equipment by means of downlink measurement, a coverage grade G_spec to which the user equipment belongs among N coverage grades {G_i|1≤i≤N} within a coverage area of a cell, where i is a positive integer, and N is an integer greater than 1;
determining, by the user equipment according to a preset correspondence between the G_spec and a system information sending parameter of the cell, a target sending parameter corresponding to the G_spec; and
receiving, by the user equipment over a target channel in a receiving manner that matches the target sending parameter, a piece of system information S_spec sent by a network device serving the cell, wherein the system information S_spec includes a diff_spec and a comm, where the diff_spec is a piece of partial system information sent by the network device for the coverage grade G_spec within the cell, and the comm is a piece of common-content partial system information that is sent by the network device to user equipments belonging to different coverage grades within the cell; and the target sending parameter includes a first sending parameter and a second sending parameter, where the first sending parameter is a physical-layer parameter and/or a higher-layer parameter that are/is used when the network device sends the comm to the user equipment belonging to the coverage grade G_spec within the cell, and the second sending parameter is a physical-layer parameter and/or a higher-layer parameter that are/is used when the network device sends the diff_spec; where
the target sending parameter is a physical-layer parameter and/or a higher-layer parameter that are/is used by the network device when user equipment belonging to the coverage grade G_spec within the cell is enabled to reliably receive the system information S_spec over the target channel.

With reference to the fourth aspect, in a first possible implementation,
the system information S_spec includes a diff_spec and a comm, where the diff_spec is a piece of partial system information sent by the network device for the coverage grade G_spec within the cell, and the comm is a piece of common-content partial system information that is sent by the network device to user equipments belonging to different coverage grades within the cell; and
the target sending parameter includes a first sending parameter and a second sending parameter, where the first sending parameter is a physical-layer parameter and/or a higher-layer parameter that are/is used when the network device sends the comm to the user equipment belonging to the coverage grade G_spec within the cell, and the second sending parameter is a physical-layer parameter and/or a higher-layer parameter that are/is used when the network device sends the diff_spec.

With reference to the fourth aspect, in a second possible implementation,
the system information S_spec includes a diff_spec and a comm, where the diff_spec is a piece of partial system information sent by the network device for the coverage grade G_spec within the cell, and the comm is a piece of common-content partial system information that is sent by the network device to user equipments belonging to different coverage grades within the cell;
the target sending parameter includes a first sending parameter, where the first sending parameter is a physical-layer parameter and/or a higher-layer parameter that are/is used when the network device sends the comm to the user equipment belonging to the coverage grade G_spec within the cell; and the receiving, by the user equipment over a target channel in a receiving manner that matches the target sending parameter, a piece of system information S_spec sent by a
network device serving the cell specifically includes:
receiving, by the user equipment, the comm over the target channel in a receiving manner that matches the first sending parameter;
obtaining, by the user equipment, a second sending parameter carried by the comm, where the second sending parameter is a physical-layer parameter and/or a higher-layer parameter that are/is used when the network device sends the diff_spec within the cell; and
receiving, by the user equipment, the diff_spec over the target channel in a receiving manner that matches the second sending parameter.

With reference to the first possible implementation of the fourth aspect or the second possible implementation of the fourth aspect, in a third possible implementation, the receiving, by the user equipment over a target channel in a receiving manner that matches the target sending parameter, a piece of system information S_spec sent by a network device serving the cell includes:
determining, by the user equipment, a receipt instance receipt_instance_spec for the system information S_spec;
at a first time offset location in a system information receiving process corresponding to the determined receipt_instance_spec, receiving, by the user equipment, the comm over the target channel in the receiving manner that matches the first sending parameter; and
at a second time offset location in the system information receiving process corresponding to the determined receipt_instance_spec, receiving, by the user equipment, the diff spec over the target channel in the receiving manner that matches the second sending parameter.

With reference to the first possible implementation of the fourth aspect or the second possible implementation of the fourth aspect, in a fourth possible implementation, the receiving, by the user equipment over a target channel in a receiving manner that matches the target sending parameter, a piece of system information S_spec sent by a network device serving the cell includes:
determining, by the user equipment, a receipt instance receipt_instance_spec for the system information S_spec;
at a first frequency in a system information receiving process corresponding to the determined receipt_instance_spec, receiving, by the user equipment, the comm over the target channel in the receiving manner that matches the first sending parameter; and
at a second frequency in the system information receiving process corresponding to the determined receipt_instance_spec, receiving, by the user equipment, the diff spec over the target channel in the receiving manner that matches the second sending parameter.

With reference to any one of the fourth aspect, or the first to the fourth possible implementations of the fourth aspect, in a fifth possible implementation, the physical-layer parameter and/or the higher-layer parameter include/includes at least one of the following parameters:
a bandwidth, a frequency, a transmit power, a modulation and coding scheme MCS, a spreading factor SF, or a quantity of repetitions.

To sum up, in the embodiments of the present invention, a network device uses different sending parameters for different coverage grades. This ensures receipt of pieces of system information by user equipments belonging to different coverage grades. Moreover, because different sending parameters are used for different coverage grades, occupation of a relatively large quantity of system resources is avoided when pieces of system information are sent according to a receiving requirement of user equipment whose receiving performance is the poorest in a cell.

### BRIEF DESCRIPTION OF DRAWINGS

FIG. 1 is a schematic diagram of BCH-to-PBCH mapping processing;
FIG. 2A to FIG. 2C are schematic diagrams of composition of pieces of system information;
FIG. 3 is a schematic diagram of a system information sending method according to an embodiment of the present invention;
FIG. 4 is a schematic diagram of a sending method according to Embodiment 1 of the present invention;
FIG. 5 is a schematic diagram of a sending method according to Embodiment 2 of the present invention;
FIG. 6 is a schematic structural diagram of a first network device according to an embodiment of the present invention;
FIG. 7 is a schematic structural diagram of a second network device according to an embodiment of the present invention;
FIG. 8 is a schematic structural diagram of first user equipment according to an embodiment of the present invention;
FIG. 9 is a schematic structural diagram of second user equipment according to an embodiment of the present invention;
FIG. 10 is a flowchart of a system information sending method according to an embodiment of the present invention; and
FIG. 11 is a flowchart of a system information receiving method according to an embodiment of the present invention.

### DESCRIPTION OF EMBODIMENTS

The following describes the technical solutions in the embodiments of the present invention with reference to the accompanying drawings in the embodiments of the present invention. Apparently, the described embodiments are merely some rather than all of the embodiments of the present invention. All other embodiments obtained by persons of ordinary skill in the art based on the embodiments of the present invention without creative efforts shall fall within the protection scope of the present invention.

Embodiments of the present invention provide a network device, user equipment, and a system information transmission method, so as to provide a system information sending solution that can not only meet receiving requirements of user equipments belonging to different coverage grades within a cell but also reduce occupation of system resources.

In the embodiments of the present invention, for user equipments belonging to different coverage grades in N coverage grades {G_i|1≤i≤N} within a coverage area of a cell, a network device uses different sending parameters to send pieces of system information. When receiving a piece of system information, user equipment first determines a coverage grade to which the user equipment belongs in the cell, and receives, in a receiving manner that matches a sending parameter used by the network device to send the system information at the determined coverage grade to which the user equipment belongs, the system information sent by the network device.

A coverage grade G_i corresponds to a piece of system information S_i. A sending parameter used by the network device to send the system information S_i is a physical-layer parameter and/or a higher-layer parameter that are/is used by the network device when user equipment belonging to the coverage grade G_i is enabled to reliably receive the system information S_i, where i and N are positive integers, and 1≤i≤N.

The network device uses different sending parameters for different coverage grades. This ensures receipt of pieces of system information by user equipments belonging to different coverage grades. Moreover, because the network device uses different sending parameters for different coverage grades, occupation of a relatively large quantity of system resources is avoided when pieces of system information are sent according to a receiving requirement of user equipment whose receiving performance is the poorest in the cell.

It should be noted that, in the embodiments of the present invention, the network device may be a base station, a base station controller, an access network device that is formed by a base station plus a radio network controller (Radio Network Controller, RNC), or the like.

For different communications protocols, the foregoing device may be named differently. For example, the base station may be referred to as a base station (Base Station, BS), a NodeB (NodeB), an evolved NodeB (evolved NodeB, eNodeB), or the like. This is not limited in the present invention.

Persons skilled in the art should know that, when a network device is obtaining a piece of system information, for a Universal Mobile Telecommunications System (Universal Mobile Telecommunications System, UMTS), a NodeB acting as a network device needs to receive, by using a standard Iub interface, a piece of system information generated by an RNC. However, in a Long Term Evolution (Long Term Evolution, LTE) system, because an RNC function is integrated into an eNodeB that acts as a network device, the eNodeB may generate a piece of system information according to a corresponding network protocol. Therefore, the embodiments of the present invention do not impose any specific limitation on how the network device obtains a piece of system information. Reference may be made to the prior art.

The sending parameter used when the network device sends the system information may include a physical-layer parameter and/or a higher-layer parameter. These parameters may include but are not limited to:
a bandwidth, a frequency, a transmit power, a modulation and coding scheme MCS (Modulation and Coding Scheme, MCS), a spreading factor SF (Spreading Factor, SF), a quantity of repetitions, and the like.

The network device may send the system information over a target channel by using the foregoing sending parameter. It should be noted that the target channel in the embodiments of the present invention is a channel used for system information sending in the prior art. For different communications protocols, specific names of the target channel vary. For specifics, refer to the prior art. In the embodiments of the present invention, a higher layer is a layer located above a physical layer in an air interface protocol, for example, a media access control layer (Media Access Control, MAC) or a radio resource control layer (Radio Resource Control, RRC). For specifics, refer to the prior art, and details are not described herein.

Correspondingly, the user equipment receives, over the target channel in a receiving manner that matches the sending parameter used by the network device to send the system information, the system information sent by the network device.

Persons skilled in the art all know that, in a communications system, a receiver needs to perform receiving in a receiving manner that matches a sending parameter that is used when a sender sends a message or data, so as to correctly receive the message or the data. In the embodiments of the present invention, the user equipment first determines, by means of downlink measurement, a coverage grade G_spec to which the user equipment belongs within the coverage area of the cell, then determines, according to a preset correspondence between the G_spec and a system information sending parameter of the cell, a target sending parameter corresponding to the G_spec, and finally receives, over the target channel in a receiving manner that matches the determined target sending parameter, a piece of system information S_spec sent by the network device.

The correspondence between the G_spec and the system information sending parameter of the cell may be prestored in a memory of the user equipment in a form of a list.

In the foregoing descriptions, reliable receipt is commonly known to persons skilled in the art, meaning that a probability that user equipment receives a piece of system information and correctly performs decoding can be greater than a preset correct-receipt probability threshold. The network device may send the system information to the user equipment within the coverage area of the cell in a commonly used broadcast manner or a multicast or unicast manner. This is not limited herein.

Persons skilled in the art should know that, in an actual communication scenario, due to impact of various factors, such as channel fading, interference, and noise, a radio signal suffers losses continuously during transmission. As a result, when a network device sends a downlink signal to user equipments within a coverage area of a cell, the downlink signal received by user equipments at different locations within the coverage area of the cell has different signal strengths. Therefore, in this embodiment, the network device may divide the coverage area of the cell into N coverage grades according to the signal strengths at which the user equipments receive the downlink signal sent by the network device. Correspondingly, the user equipment may measure the downlink signal transmitted by the network device, to determine a coverage grade to which the user equipment belongs.

For example, a method for measuring receiving performance of user equipment within a cell is to determine the receiving performance according to a coupling loss from the user equipment to a transceiver of a network device. A larger coupling loss indicates poorer receiving performance of the user equipment within the cell.

Therefore, a correspondence between a coupling loss and a coverage grade may be specified in advance by using a protocol. Then, the user equipment determines a coupling loss to the transceiver of the cell according to a received strength of a reference signal of the cell or a time consumed by a synchronization process, and determines a coverage grade within the cell according to the determined coupling loss.

A method for the user equipment to determine a coverage grade is not limited thereto, and the foregoing description is merely an example.

In an LTE system, the foregoing reference signal may be a cell-specific reference signal (CRS).

The sending parameter, corresponding to the coverage grade G_i, used by the network device to send the system information may be specified in advance by using a protocol. The sending parameter is a physical-layer parameter and/or a higher-layer parameter that are/is used by the network device when the user equipment belonging to the coverage grade G_i is enabled to reliably receive the system information S_i.

An optional solution for division into coverage grades includes:
categorizing the user equipments within the coverage area of the cell into N grades {G_i|1≤i≤N}, where i and N are positive integers.

In this embodiment, for convenience of description, it is specified that a larger i indicates poorer receiving performance of the user equipment belonging to the coverage grade G_i within the cell. Certainly, persons skilled in the art may specify, based on the solution in the embodiments of the present invention, that a larger i indicates better receiving performance of the user equipment belonging to the coverage grade G_i within the cell. This alternative solution is, in essence, the same as the solution provided in the embodiments of the present invention, and therefore, still falls within the protection scope of the present invention, provided that it is indicated that user equipments belonging to different coverage grades have different receiving performance within the cell.

A piece of system information corresponding to the coverage grade G_i is an S_i. For different G_i's, the network device uses different sending parameters to send pieces of system information S_i within the cell.

For example, for user equipment with a larger value of i, that is, user equipment with poorer receiving performance within the cell, the network device may use a larger quantity of repetitions when sending the system information, to ensure reliable receipt by the user equipment.

For example, for user equipment with a smaller value of i, that is, user equipment with better receiving performance within the cell, the network device may use a smaller quantity of repetitions or a higher encoding rate when sending the system information, to reduce occupation of air-interface resources while ensuring reliable receipt by the user equipment belonging to the coverage grade.

Optionally, the network device may send the pieces of system information in a time division multiplexing or frequency division multiplexing manner.

In the embodiments of the present invention, it should be noted that content of the system information S_i corresponding to any coverage grade G_i may be identical to or different from content of the system information Sj corresponding to any coverage grade Gj in the N coverage grades other than the coverage grade G_i, where 1≤j≤N and i≠j.

Persons skilled in the art should know that a piece of system information generally includes a master information block MIB and various system information blocks SIB, such as SIB1, SIB2, SIB3... For specifics, refer to descriptions in a related communications protocol.

In the embodiments of the present invention, for example, it is assumed that the system information obtained by the network device includes two types of system information blocks, SIBₓ and SIB_{y}, where x and y are both natural numbers. In a possible implementation, the system information S_i includes an SIBₓi and an SIB_{y}i, and the system information Sj includes an SIBₓj and an SIBₓj. Content of the system information block SIBₓi and content of the system information block SIBₓj may be identical or may be different. Similarly, content of the system information block SIB_{y}i and content of the system information block SIB_{y}j may be identical or may be different.

In another possible implementation, the system information S_i includes an SIBₓi and an SIB_{y}, and the system information S_j includes an SIBₓj. Content of the system information block SIBₓi and content of the system information block SIBₓj may be identical or may be different. The system information block SIB_{y} is a system information block required by the user equipment belonging to the coverage grade G_i, but is not a system information block required by user equipment belonging to the coverage grade G_j.

According to whether content of pieces of system information is identical for different coverage grades, in the embodiments of the present invention, the system information sending solution may be classified into the following two types.

### Manner 1

For different coverage grades, content of pieces of system information is identical.

In this manner, the content of pieces of system information sent by the network device to user equipments belonging to different coverage grades is identical, only that sending parameters are different.

### Manner 2

For different coverage grades, content of pieces of system information is different.

In this manner, the content of pieces of system information is different for different coverage grades, and sending parameters used by the network device to send the pieces of system information are also different.

For example, in a case of the system information block type 3 (System Information Block type 3, SIB3), different cell reselection parameters are sent for different coverage grades G_i, and therefore, cell reselection behaviors of user equipments belonging to the different coverage grades G_i are different. For example, different cell reselection parameters are set to make it easier for user equipment with relatively poor receiving performance to implement cell reselection.

For another example, in a case of the system information block type 2 (System Information Block type 2, SIB2), different common-channel configuration parameters are sent for different coverage grades G_i, and therefore, common-channel configurations used by user equipments belonging to the different coverage grades G_i within the cell are different. For example, for a parameter related to a random access process, a larger power ramp step (powerRampingStep) may be configured for user equipment with poorer receiving performance, so that power can increase rapidly when the user equipment with poorer performance sends a random access preamble, thereby reducing a random access delay of the user equipment with poorer receiving performance.

The foregoing SIB2 and SIB3 are merely examples. Other system information configurations are similar and are not listed herein one by one. Sending different pieces of system information S_i to user equipments belonging to different coverage grades G_i can implement different configurations for the user equipments belonging to the different coverage grades G_i. In this way, user equipments belonging to different coverage grades can all communicate normally and efficiently within the cell.

Optionally, for Manner 2 in which content of pieces of system information is different for different coverage grades, an optional implementation is:
the system information S_i includes two parts, a comm and a diff_i, where
the comm is a piece of common-content partial system information that is obtained by the network device for different coverage grades within the cell, and this part may include a system frame number (System Frame Number, SFN) and other information; and
the diff i is a piece of partial system information obtained by the network device for the coverage grade G_i; for example, different control channel configuration information is sent to user equipments belonging to different coverage grades G_i.

A benefit of this is that different control channels and other information can be configured for the user equipments specific to different coverage grades G_i. For example, a control channel with lower interference is configured for user equipment with a larger i at the coverage grade G_i, so as to improve control channel communication quality of such user equipment.

The solution overcomes an existing limitation that a same system information and a same configured control channel are used for all user equipments within a cell, and implements differentiated processing of user equipment coverage.

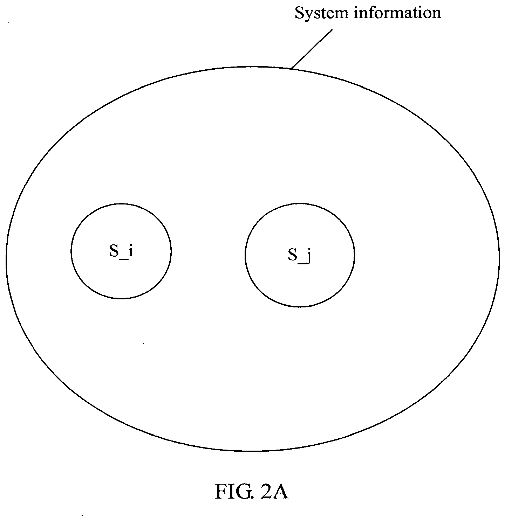

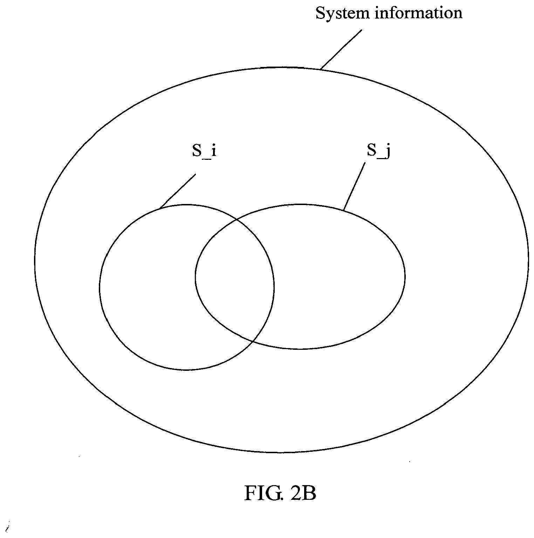

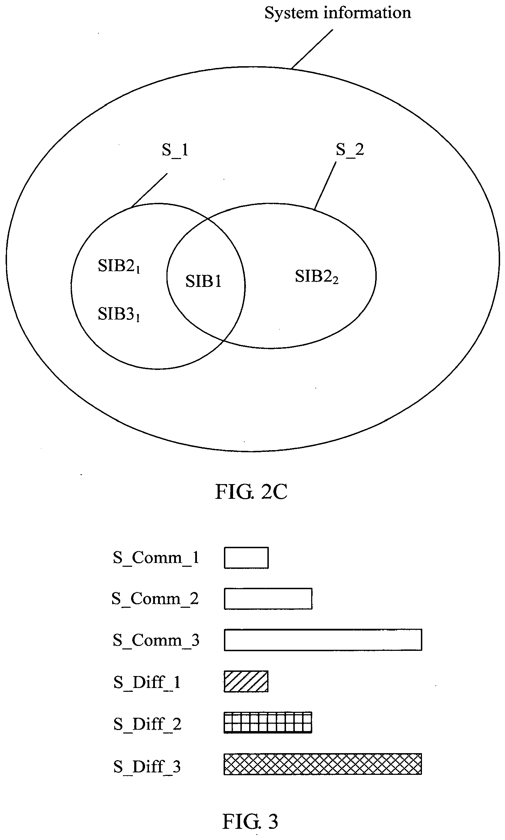

It should be noted that, in the embodiments of the present invention, a one-to-one correspondence does not necessarily exist between the pieces of system information obtained by the network device and the N coverage grades. As shown in FIG. 2A to FIG. 2C, pieces of system information obtained by a network device may be considered as a universal set constituted by system information blocks (System Information Block, SIB) and/or master information blocks (Master Information Block, MIB) that are required by all user equipments within a coverage area of the network device.

In the embodiments of the present invention, the system information S_i corresponding to any coverage grade G_i is a subset of the universal set. The system information Sj corresponding to any coverage grade G_j in the N coverage grades other than the coverage grade G_i is also a subset of the universal set. The system information S_i and the system information S_j may be one subset, may have an intersection set, or may be two subsets that have no intersection set.

For example, it is assumed that the pieces of system information obtained by the network device include three types of system information blocks, SIB1, SIB2, and SIB3, and there are two coverage grades within the coverage area of the cell. Because a network side may configure, according to different coverage grades, identical or different content for one type of system information block (or master information block) in the pieces of system information respectively corresponding to the coverage grades, a piece of system information S_1 corresponding to a coverage grade G_1 may include an SIB1₁, an SIB2₁, and an SIB3₁, and a piece of system information S_2 corresponding to a coverage grade G_2 may include an SIB1₂ and an SIB2₂. In this case, if content of the SIB1 is always the same, that is, SIB1₁=SIB1₂, the SIB1 is an intersection set of the system information S_1 and the system information S_2, that is, a common partial system information, comm, for all coverage grades within the coverage area of the network device. For the SIB2, if content of SIB2's configured for the coverage grades is different at some moments, that is, if SIB2₁≠SIB2₂ at any moment, the SIB2 may be considered as a diff_i, a piece of partial system information of the system information S_i corresponding to any coverage grade G_i, that is different from a piece of system information corresponding to another coverage grade. In particular, the SIB3 may also be considered as a diff i because a system information block of the type SIB3 is not needed in the system information S_2.

FIG. 3 is a schematic diagram of a manner in which a network device sends a comm and diff_i's for different coverage grades G_i. For example, N=3. There are a total of three coverage grades: G_1, G_2, and G_3.

In FIG. 3, different system information lengths indicate different sending parameters used when the network device sends pieces of system information, and different system information fill-in patterns indicate different system information content.

S_comm_1 represents a comm corresponding to a coverage grade G_1.

S_comm_2 represents a comm corresponding to a coverage grade G_2.

S_comm_3 represents a comm corresponding to a coverage grade G_3.

S_diff_1 represents a diff_1 corresponding to the coverage grade G_1.

S_diff_2 represents a diff_2 corresponding to the coverage grade G_2.

S_diff_3 represents a diff_3 corresponding to the coverage grade G_3.

An implementation shown in FIG. 3 is that, for different coverage grades G_i, sending parameters used when the network device sends comm's are different, and sending parameters used when the network device sends diff_i's are also different.

Another optional implementation is that, for different coverage grades G_i, the network device uses a same sending parameter when sending comm's, and uses different sending parameters when sending diff_i's.

The network device sends the comm over the target channel by using a first sending parameter, and sends the diff_i over the target channel by using a second sending parameter.

In addition, in the optional implementation, optionally, the first sending parameter used when the network device sends the comm is a physical-layer parameter and/or a higher-layer parameter that are/is used by the network device when user equipment belonging to a coverage grade G_n is enabled to reliably receive the comm, and the sending parameter used when the network device sends the diff i is a physical-layer and/or a higher-layer parameter that are/is used by the network device when user equipment belonging to the coverage grade G_i is enabled to reliably receive the diff_i.

Because it is specified in advance that a larger i indicates poorer receiving performance for the user equipment belonging to the coverage grade G_i within the cell, the network device sends the comm by using a sending parameter corresponding to the G_N, that is, sends the comm according to a sending parameter for user equipment with the poorest receiving performance. Because the sending parameter can enable the user equipment belonging to the coverage grade G_N to reliably receive the comm, user equipment belonging to another coverage grade within the cell can also reliably receive the comm in a receiving manner that matches the sending parameter corresponding to the G_N. This implementation simplifies processing of the common partial system information, comm, and reduces implementation complexity of the network device and the user equipment.

Optionally, in one system information sending process, the network device sends multiple pieces of partial system information including the comm and at least one diff_i, in a time division multiplexing or frequency division multiplexing manner.

The one system information sending process may be a process in which the network device sends, within a time period, a piece of system information corresponding to one or more coverage grades.

That the network device sends the pieces of system information in a time division multiplexing or frequency division multiplexing manner can ensure that the user equipments can receive the comm and the diff i separately.

Specifically, in one system information sending process, the network device sends, in a time division multiplexing or frequency division multiplexing manner, M+1 pieces of partial system information including M pieces of partial system information of the N diff_i's and the comm. The first sending parameter used when the network device sends the comm is a physical-layer parameter and/or a higher-layer parameter that are/is used by the network device when user equipment belonging to a coverage grade G_n is enabled to reliably receive the comm, where M is a positive integer that is not greater than N, and a maximum value of i in the N diff_i's is n.

The second sending parameter used when the network device sends the diff i is a physical-layer parameter and/or a higher-layer parameter that are/is used by the network device when user equipment belonging to the coverage grade G_i is enabled to reliably receive the diff i.

In this way, it can be ensured that, in this system information sending process, the user equipment belonging to the coverage grade G_n can reliably receive a complete system information, that is, reliably receive both the comm and the diff_n.

Optionally, user equipment belonging to a coverage grade G_k can also reliably receive a piece of system information by using a receiving parameter corresponding to the coverage grade G_n to receive the comm, where k is a positive integer less than n. Because it is specified in advance that a larger i indicates poorer receiving performance of the user equipment belonging to the G_i within the cell, receiving performance of the user equipment belonging to the coverage grade G_k within the cell is better than receiving performance of the user equipment belonging to the coverage grade G_n. The user equipment belonging to the coverage grade G_k can reliably receive the system information when receiving the comm in a receiving manner that matches the sending parameter corresponding to the coverage grade G_n.

Optionally, in L consecutive system information sending processes, the network device completes sending the pieces of system information corresponding to the N coverage grades within the coverage area of the cell, where L is a positive integer. In this way, in the L consecutive system information sending processes, the network device sends the pieces of system information to the user equipments belonging to all the coverage grades within the cell.

Optionally, in the L consecutive system information sending processes, a smaller i indicates more times that the diff i is sent.

As described above, in the embodiments of the present invention, the system information sending parameter corresponding to the coverage grade G_i can ensure reliable receipt by the user equipment belonging to the coverage grade G_i. For user equipment with poorer receiving performance, the network device uses a larger quantity of repetitions, a higher encoding rate, or another sending parameter to send the system information. As a result, more air-interface resources need to be occupied when a piece of system information is sent to the user equipment with poorer receiving performance. In the foregoing optional implementation, the diff_i is sent more times when i is smaller, and the diff_i is sent fewer times when i is larger. This reduces occupation of air-interface resources.

Optionally, in the implementation solution in which the network device sends the comm over the target channel by using the first sending parameter and sends the diff i over the target channel by using the second sending parameter, the network device may add the second sending parameter to the comm when sending the comm by using the first sending parameter. In this case, the user equipment obtains the second sending parameter from the comm after receiving the comm in a receiving manner that matches the first sending parameter, and then receives the diff i in a receiving manner that matches the obtained second sending parameter. For the system information sending manner shown in FIG. 3, for an example of using time division multiplexing to send multiple pieces of partial system information including the comm and at least one diff_i, reference may be made to the later discussed Embodiment 1; for an example of using frequency division multiplexing to send multiple pieces of partial system information including the comm and at least one diff_i, reference may be made to the later discussed Embodiment 2.

The foregoing content describes how a network device sends pieces of system information in the embodiments of the present invention. It should be known that, in a communications system, after achieving downlink synchronization with a current cell, user equipment needs to use a piece of system information of the current cell to perform access. As described in the prior art, in a system information obtaining process, user equipment needs to first obtain a sending parameter used when a network device sends a piece of system information, to determine a start frame, a quantity of repetitions, a system information window, a period, and other scheduling information; and receives, in a receiving manner corresponding to the sending parameter, the system information required by the user equipment. Therefore, the receiving manner at the receive end matches the sending parameter at the transmit end. This ensures that the receive end can correctly receive a message or data sent by the transmit end. For specifics, refer to the prior art, and details are not described herein. That is, a receiving manner in which user equipment belonging to a coverage grade G_i receives a piece of system information matches a sending parameter used when the network device sends the system information to the user equipment belonging to the coverage grade G_i.

The following focuses on describing a solution for user equipment to receive a piece of system information. Because receipt by user equipment corresponds to sending by a network device, in a specific implementation, for an implementation for the user equipment, reference may be made to the implementation for the network device. For details about the implementation for the user equipment, refer to the foregoing descriptions regarding the network device, and repetition is omitted herein.

In the embodiments of the present invention, user equipment belonging to a coverage grade G_i receives a piece of system information S_i in a receiving manner that matches a sending parameter corresponding to the coverage grade G_i. Before receiving the system information, the user equipment first determines, by means of downlink measurement, a coverage grade G_spec to which the user equipment belongs within a coverage area of a cell, and then determines, according to a preset correspondence between the G_spec and a system information sending parameter of the cell, a target sending parameter corresponding to the G_spec. Finally, the user equipment receives, over a target channel in a receiving manner that matches the determined target sending parameter, a piece of system information S_spec sent by the network device.

Herein, G_spec ∈ {G_i|1≤i≤N}, S_spec ∈ {S_i|1≤i≤N}, and 1≤spec≤N.

Optionally, if the network device sends pieces of system information in a time division multiplexing manner, optionally, when receiving the system information, the user equipment first determines a receipt instance for the system information, determines a time offset of a moment for receiving the system information S_spec corresponding to the coverage grade G_spec to which the user equipment belongs, in relation to the determined receipt instance, and receives, at the determined time offset, the system information S_spec sent to the user equipment.

If the network device sends pieces of system information in a frequency division multiplexing manner, optionally, when receiving the system information, the user equipment still needs to first determine a receipt instance for the system information, and also needs to determine on which frequency channel the system information S_spec corresponding to the coverage grade G_spec to which the user equipment belongs is to be received. Finally, the user equipment receives, at the determined receipt instance on the determined frequency channel, the system information sent to the user equipment.

As described above, when sending pieces of system information, the network device sends pieces of system information of common or different content for different coverage grades. If the network device sends pieces of system information of different content for different coverage grades, an optional implementation is that any system information S_i includes a diff_i and a comm, where
the diff i is a piece of partial system information sent by the network device for the coverage grade G_i, and the comm is a piece of common-content partial system information that is sent by the network device for different coverage grades.

In this implementation, an optional implementation is:
the preset target sending parameter, for a piece of system information of the cell, corresponding to the G_spec includes a first sending parameter and a second sending parameter, where
the first sending parameter is a physical-layer parameter and/or a higher layer parameter that are/is used when the network device sends the comm to the user equipment belonging to the coverage grade G_spec within the cell, and the second sending parameter is a physical-layer parameter and/or a higher layer parameter that are/is used when the network device sends the diff_spec.

Therefore, in this implementation, an optional receiving solution for the user equipment includes: receiving, by the user equipment, the comm in a receiving manner that matches a preset comm target sending parameter corresponding to the G_spec; and receiving the diff_spec corresponding to the coverage grade G_spec, in a receiving manner that matches a preset diff spec target sending parameter corresponding to the G_spec.

In this implementation, another optional implementation is:
the target sending parameter includes a first sending parameter, where the first sending parameter is a physical-layer parameter and/or a higher-layer parameter that are/is used when the network device sends the comm to the user equipment belonging to the coverage grade G_spec within the cell;
the user equipment receives the comm over the target channel in a receiving manner that matches the first sending parameter, and obtains a second sending parameter carried by the comm, where the second sending parameter is a physical-layer parameter and/or a higher-layer parameter that are/is used when the network device sends the diff_spec within the cell; and
the user equipment receives the diff_spec over the target channel in a receiving manner that matches the second sending parameter.

Further, as described above, to simplify the comm sending solution, an optional implementation for the network device is that:
for different coverage grades G_i, the network device uses a same first sending parameter when sending the comm, and uses different sending parameters when sending the diff_i.

For example, the network device sends the comm by using a comm sending parameter corresponding to the coverage grade G_N, and sends the diff i by using a diff i sending parameter corresponding to the coverage grade G_i.

Correspondingly, the user equipment receives the comm in a receiving manner that matches the first comm sending parameter corresponding to the coverage grade G_N, and receives the diff_spec in a receiving manner that matches the diff_spec sending parameter corresponding to the coverage grade G_spec to which the user equipment belongs.

If the network device sends, in a time division multiplexing manner, multiple pieces of partial system information including the comm and at least one diff i in one system information sending process, an optional implementation is that the user equipment receives the system information at a receipt instance for the user equipment. Specifically:
the user equipment determines a receipt instance receipt_instance_spec for the system information corresponding to the coverage grade G_spec, where the receipt instance receipt_instance_i is a receipt instance at which the user equipment belonging to the coverage grade G_i receives the system information; at a first time offset location in a receiving process corresponding to the determined receipt instance receipt_instance_spec, the user equipment receives the comm in the receiving manner that matches the first comm sending parameter corresponding to the coverage grade G_spec; and
at a second time offset location in the receiving process corresponding to the receipt instance receipt_instance_spec, the user equipment receives the diff_spec in the receiving manner that matches the second diff_spec sending parameter corresponding to the coverage grade G_spec.

The first time offset location and the second time offset location may be specified in advance by using a protocol, or may be informed by the network device to the user equipment before the system information is sent to the user equipment.

Another possible implementation is that, the user equipment receives pieces of system information at multiple receipt instances, and obtains a combined gain by combining the pieces of system information received at the different receipt instances.

Specifically, the user equipment determines a receipt instance receipt_instance_m for a piece of system information corresponding to each coverage grade G_m, where m is a positive integer, and spec≤m≤N;
at a third time offset location in a receiving process corresponding to the determined receipt instance receipt_instance_m for each system information, the user equipment receives the comm in a receiving manner that matches a comm sending parameter corresponding to the coverage grade G_m; and
at a fourth time offset location in the receiving process corresponding to the determined receipt instance receipt_instance_spec for the system information, the user equipment receives the diff_spec in the receiving manner that matches the diff_spec sending parameter corresponding to the coverage grade G_spec.

The third time offset location and the fourth time offset location may be specified in advance by using a protocol, or may be informed by the network device to the user equipment before the system information is sent to the user equipment.

If the network device sends, in a frequency division multiplexing manner, multiple pieces of partial system information including the comm and at least one diff i in one system information sending process, an optional implementation is that the user equipment receives the system information at a receipt instance for the user equipment. Specifically:
the user equipment determines a receipt instance receipt_instance_spec for the system information corresponding to the coverage grade G_spec, where the receipt instance receipt_instance_i is a receipt instance at which the user equipment belonging to the coverage grade G_i receives the system information;
the user equipment receives the comm at a first frequency in a receiving process corresponding to the determined receipt instance receipt_instance_spec, in the receiving manner that matches the comm sending parameter corresponding to the coverage grade G_spec; and
the user equipment receives the diff_spec at a second frequency in the receiving process corresponding to the determined receipt instance receipt_instance_spec, in the receiving manner that matches the diff_spec sending parameter corresponding to the coverage grade G_spec.

The first frequency and the second frequency may be specified in advance by using a protocol, or may be informed by the network device to the user equipment before the system information is sent to the user equipment.

Another optional implementation is that, the user equipment receives pieces of system information at multiple receipt instances, and obtains a combined gain by combining the pieces of system information received at the different receipt instances.

Specifically, the user equipment determines a receipt instance receipt_instance_m for a piece of system information corresponding to each coverage grade G_m, where m is a positive integer, and spec≤m≤N;
the user equipment receives the comm at the determined receipt instance receipt_instance_m for each system information, at a third frequency in a receiving manner that matches a comm sending parameter corresponding to the coverage grade G_m; and
the user equipment receives the diff_spec at the determined receipt_instance_spec, at a fourth frequency in the receiving manner that matches the diff_spec sending parameter corresponding to the coverage grade G_spec.

The third frequency and the fourth frequency may be specified in advance by using a protocol.

The foregoing content describes in detail how a network device sends pieces of system information and how user equipment receives a piece of system information in the embodiments of the present invention. The following provides descriptions by using Embodiment 1 and Embodiment 2 as specific examples.

### Embodiment 1

In Embodiment 1, a network device sends, in a time division multiplexing manner, multiple pieces of partial system information including a comm and at least one diff_i.

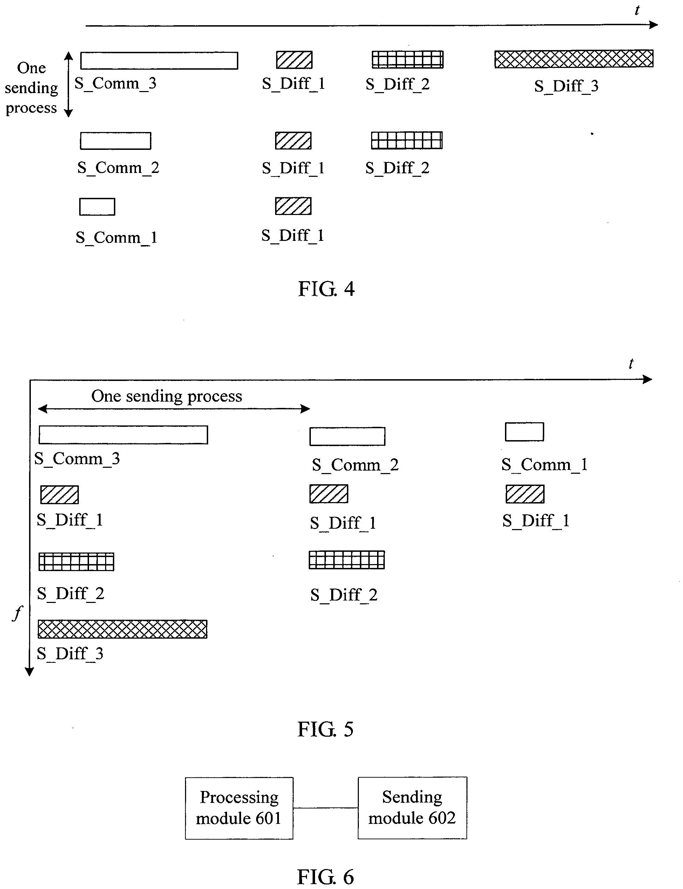

As shown in FIG. 4, in one system information sending process, a network device sends, in a time division multiplexing manner, N+1 pieces of partial system information including a comm and all diff i's.

In FIG. 4, one row corresponds to one system information sending process, and different rows correspond to different system information sending processes. In a system information sending process corresponding to the first row, the network device sends the comm according to a sending parameter corresponding to a coverage grade G_3, and also sends, in a time division multiplexing manner, a diff_1, a diff_2, and a diff_3 that respectively correspond to a coverage grade G_1, a coverage grade G_2, and the coverage grade G_3.

In a system information sending process corresponding to the second row, the network device sends the comm according to a sending parameter corresponding to the coverage grade G_2, and also sends, in a time division multiplexing manner, the diff_1 and the diff_2 that respectively correspond to the coverage grade G_1 and the coverage grade G_2.

In a system information sending process corresponding to the third row, the network device sends the comm by using a sending parameter corresponding to the coverage grade G_1, and also sends only the diff_1 corresponding to the coverage grade G_1.

User equipment belonging to the coverage grade G_1 can receive the system information in any one of the three rows, that is, can reliably receive a complete system information S_1. A difference is that, the comm in the system information in the first row needs to be received in a receiving manner that matches the sending parameter corresponding to the coverage grade G_3, the comm in the system information in the second row needs to be received in a receiving manner that matches the sending parameter corresponding to the coverage grade G_2, and the comm in the system information in the third row needs to be received in a receiving manner that matches the sending parameter corresponding to the coverage grade G_1.

Optionally, the user equipment belonging to the coverage grade G_1 may separately receive pieces of system information in at least two of the three rows, and combine the received pieces of system information to obtain a combined gain.

User equipment belonging to the coverage grade G_2 can receive the system information in any one of the first row or the second row, that is, can reliably receive a complete system information S_2. A difference is that, the comm in the system information in the first row needs to be received in a receiving manner that matches the sending parameter corresponding to the coverage grade G_3, and the comm in the system information in the second row needs to be received in a receiving manner that matches the sending parameter corresponding to the coverage grade G_2. It should be noted that, for example, if a difference between sending parameters of different coverage grades is only a difference between quantities of repetitions, when the user equipment receives the system information, an optional implementation is that the user equipment can implement correct decoding after receiving the first few common pieces of partial system information comm that are repetitively sent. In this case, even if the user equipment can receive the comm more times as indicated by a receiving manner corresponding to a coverage grade within the cell, the user equipment does not need to continue the receipt. This saves a processing capacity of the user equipment and also saves power.

User equipment belonging to the coverage grade G_3 can receive only the system information in the first row, that is, can reliably receive a complete system information S_3.

### Embodiment 2

In Embodiment 2, a network device sends, in a frequency division multiplexing manner, multiple pieces of partial system information including a comm and at least one diff_i.

As shown in FIG. 5, in one system information sending process, a network device sends, in a frequency division multiplexing manner, multiple pieces of partial system information including a comm and at least one diff_i.

In FIG. 5, one column corresponds to one system information sending process, and different columns correspond to different system information sending processes. In a system information sending process corresponding to the first column, the network device sends the comm by using a sending parameter corresponding to a coverage grade G_3, and also sends, in a frequency division multiplexing manner, a diff_1, a diff_2, and a diff_3 corresponding to a coverage grade G_1, a coverage grade G_2, and the coverage grade G_3.

In a system information sending process corresponding to the second column, the network device sends the comm by using a sending parameter corresponding to the coverage grade G_2, and also sends, in a frequency division multiplexing manner, the diff_1 and the diff_2 that respectively correspond to the coverage grade G_1 and the coverage grade G_2.

In a system information sending process corresponding to the third column, the network device sends the comm by using a sending parameter corresponding to the coverage grade G_1, and also sends only the diff_1 corresponding to the coverage grade G_1.

User equipment belonging to the coverage grade G_1 can receive the system information in any one of the three columns, that is, can reliably receive a complete system information S_1. A difference is that, the comm in the system information in the first column needs to be received in a receiving manner that matches the sending parameter corresponding to the coverage grade G_3, the comm in the system information in the second column needs to be received in a receiving manner that matches the sending parameter corresponding to the coverage grade G_2, and the comm in the system information in the third column needs to be received in a receiving manner that matches the sending parameter corresponding to the coverage grade G_1.

Optionally, the user equipment belonging to the coverage grade G_1 may separately receive the pieces of system information in at least two of the three columns, and combine the received pieces of system information to obtain a combined gain.

User equipment belonging to the coverage grade G_2 can receive the system information in any one of the first column or the second column, that is, can reliably receive a complete system information S_2. A difference is that, the comm in the system information in the first column needs to be received in the receiving manner that matches the sending parameter corresponding to the coverage grade G_3, and the comm in the system information in the second column needs to be received in the receiving manner that matches the sending parameter corresponding to the coverage grade G_2.

User equipment belonging to the coverage grade G_3 can receive only the system information in the first column, to reliably receive a complete system information S_3.

The foregoing content describes a solution for a network device to send pieces of system information and a solution for user equipment to receive a piece of system information in the embodiments of the present invention. The following separately describes a network device, user equipment, and a system information transmission method that are provided in the embodiments of the present invention. Principles used by the devices and method to resolve technical problems are similar to the foregoing solutions. For implementations, refer to the implementations of the foregoing solutions, and repetition is omitted herein.

FIG. 6 is a schematic structural diagram of a first network device according to an embodiment of the present invention. As shown in FIG. 6, the network device includes:
a processing module 601, configured to obtain pieces of system information corresponding to N coverage grades within a coverage area of a cell, where a coverage grade G_i corresponds to a piece of system information S_i in the pieces of system information; and
a sending module 602, configured to send the pieces of system information over a target channel by using different sending parameters, where a sending parameter used to send the system information S_i is a physical-layer parameter and/or a higher-layer parameter that are/is used by the sending module 602 when user equipment belonging to the coverage grade G_i is enabled to reliably receive the system information S_i over the target channel; where
i and N are positive integers, and 1≤i≤N.

Optionally, the pieces of system information are sent by the sending module 602 in a time division multiplexing or frequency division multiplexing manner.

Optionally, the system information S_i is identical to or different from a piece of system information S_j.

The system information S_j is a piece of system information corresponding to any coverage grade Gj in the N coverage grades other than the coverage grade G_i, where 1≤j≤N, and i≠j. Optionally, when the system information S_i is different from the system information S_j,
the system information S_i includes a diff_i and a comm, where
the diff i is a piece of partial system information obtained by the processing module 601 for the coverage grade G_i; and
the comm is a piece of common-content partial system information for the system information S_i and the system information S_j.

Optionally, the sending module 602 is specifically configured to:
in one system information sending process, send M+1 pieces of partial system information including M pieces of partial system information of the N diff i's and the comm; where
the comm is sent over the target channel by using a first sending parameter, where the first sending parameter is a physical-layer parameter and/or a higher-layer parameter that are/is used by the sending module 602 when user equipment belonging to a coverage grade G_n is enabled to reliably receive the comm over the target channel;
the diff i is sent over the target channel by using a second sending parameter, where the second sending parameter is a physical-layer parameter and/or a higher-layer parameter that are/is used by the sending module 602 when the user equipment belonging to the coverage grade G_i is enabled to reliably receive the diff i over the target channel; and
M is a positive integer that is not greater than N; and among coverage grades corresponding to the M pieces of partial system information, receiving performance of the user equipment belonging to the coverage grade G_n is the poorest in the cell.

Optionally, the sending module 602 is specifically configured to:
in L consecutive system information sending processes, complete sending the pieces of system information obtained by the processing module 601 that are corresponding to the N coverage grades within the coverage area of the cell, where L is a positive integer, and in the L consecutive system information sending processes, a smaller i indicates more times that the diff i is sent.

Optionally, the physical-layer parameter and/or the higher-layer parameter include/includes at least one of the following parameters:
a bandwidth, a frequency, a transmit power, a modulation and coding scheme MCS, a spreading factor SF, a quantity of repetitions, or a time length.

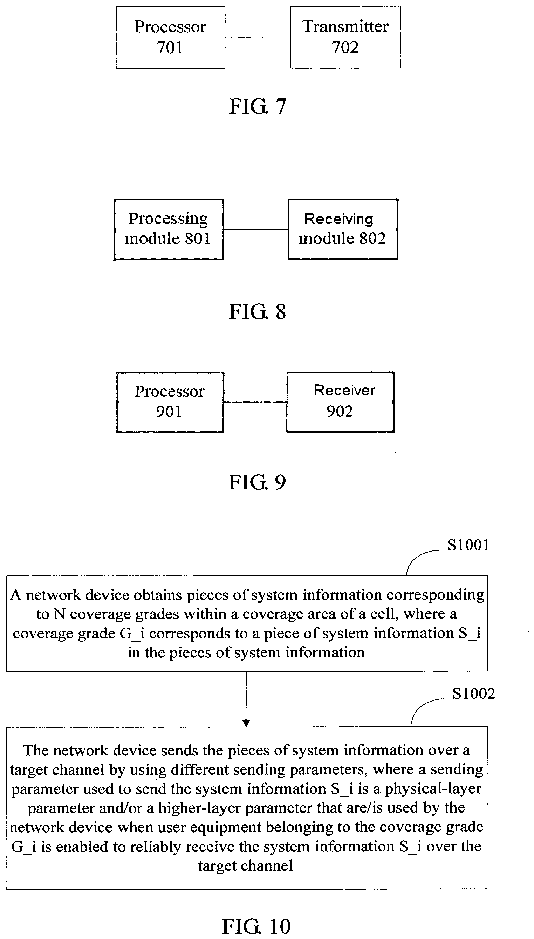

FIG. 7 is a schematic structural diagram of a second network device according to an embodiment of the present invention. As shown in FIG. 7, the network device includes:
a processor 701, configured to obtain pieces of system information corresponding to N coverage grades within a coverage area of a cell, where a coverage grade G_i corresponds to a piece of system information S_i in the pieces of system information; and
a transmitter 702, configured to send the pieces of system information over a target channel by using different sending parameters, where a sending parameter used to send the system information S_i is a physical-layer parameter and/or a higher-layer parameter that are/is used by the transmitter 702 when user equipment belonging to the coverage grade G_i is enabled to reliably receive the system information S_i over the target channel; where
i and N are positive integers, and 1≤i≤N.

For a specific implementation of the processor 701, refer to the foregoing processing module 601. For a specific implementation of the transmitter 702, refer to the foregoing sending module 602.

FIG. 8 is a schematic structural diagram of first user equipment according to an embodiment of the present invention. As shown in FIG. 8, the user equipment includes:
a processing module 801, configured to: determine, by means of downlink measurement, a coverage grade G_spec to which the user equipment belongs among N coverage grades {G_i| 1≤i≤N}within a coverage area of a cell, where i is a positive integer, and N is an integer greater than 1; and determine, according to a preset correspondence between the G_spec and a system information sending parameter of the cell, a target sending parameter corresponding to the G_spec; and
a receiving module 802, configured to receive, over a target channel in a receiving manner that matches the target sending parameter, a piece of system information S_spec sent by a network device serving the cell; where
the target sending parameter is a physical-layer parameter and/or a higher-layer parameter that are/is used by the network device when user equipment belonging to the coverage grade G_spec within the cell is enabled to reliably receive the system information S_spec over the target channel.

Optionally, the system information S_spec includes a diff_spec and a comm, where the diff_spec is a piece of partial system information sent by the network device for the coverage grade G_spec within the cell, and the comm is a piece of common-content partial system information that is sent by the network device to user equipments belonging to different coverage grades within the cell; and
the target sending parameter includes a first sending parameter and a second sending parameter, where the first sending parameter is a physical-layer parameter and/or a higher-layer parameter that are/is used when the network device sends the comm to the user equipment belonging to the coverage grade G_spec within the cell, and the second sending parameter is a physical-layer parameter and/or a higher-layer parameter that are/is used when the network device sends the diff_spec.

Optionally, the system information S_spec includes a diff_spec and a comm, where the diff_spec is a piece of partial system information sent by the network device for the coverage grade G_spec within the cell, and the comm is a piece of common-content partial system information that is sent by the network device to user equipments belonging to different coverage grades within the cell;
the target sending parameter includes a first sending parameter, where the first sending parameter is a physical-layer parameter and/or a higher-layer parameter that are/is used when the network device sends the comm to the user equipment belonging to the coverage grade G_spec within the cell; and
the receiving module 802 is specifically configured to:
   receive the comm over the target channel in a receiving manner that matches the first sending parameter;
   obtain a second sending parameter carried by the comm, where the second sending parameter is a physical-layer parameter and/or a higher-layer parameter that are/is used when the network device sends the diff_spec within the cell; and
   receive the diff_spec over the target channel in a receiving manner that matches the second sending parameter.

Optionally, the receiving module 802 is specifically configured to:
determine a receipt instance receipt_instance_spec for the system information S_spec;
at a first time offset location in a system information receiving process corresponding to the determined receipt_instance_spec, receive the comm over the target channel in the receiving manner that matches the first sending parameter; and
at a second time offset location in the system information receiving process corresponding to the determined receipt_instance_spec, receive the diff_spec over the target channel in the receiving manner that matches the second sending parameter.

Optionally, the receiving module 802 is specifically configured to:
determine a receipt instance receipt_instance_spec for the system information S_spec;
at a first frequency in a system information receiving process corresponding to the determined receipt_instance_spec, receive the comm over the target channel in the receiving manner that matches the first sending parameter; and
at a second frequency in the system information receiving process corresponding to the determined receipt_instance_spec, receive the diff_spec over the target channel in the receiving manner that matches the second sending parameter.

Optionally, the physical-layer parameter and/or the higher-layer parameter include/includes at least one of the following parameters:
a bandwidth, a frequency, a transmit power, a modulation and coding scheme MCS, a spreading factor SF, or a quantity of repetitions.

FIG. 9 is a schematic structural diagram of second user equipment according to an embodiment of the present invention. As shown in FIG. 9, the user equipment includes:
a processor 901, configured to: determine, by means of downlink measurement, a coverage grade G_spec to which the user equipment belongs among N coverage grades {G_i| 1≤i≤N} within a coverage area of a cell, where N is an integer greater than 1; and determine, according to a preset correspondence between the G_spec and a system information sending parameter of the cell, a target sending parameter corresponding to the G_spec; and
a receiver 902, configured to receive, over a target channel in a receiving manner that matches the target sending parameter, a piece of system information S_spec sent by a network device serving the cell; where
the target sending parameter is a physical-layer parameter and/or a higher-layer parameter that are/is used by the network device when user equipment belonging to the coverage grade G_spec within the cell is enabled to reliably receive the system information S_spec over the target channel.

For an implementation of the processor 901, refer to the foregoing processing module 801. For an implementation of the receiver 902, refer to the foregoing receiving module 802.

FIG. 10 is a flowchart of a system information sending method according to an embodiment of the present invention. As shown in FIG. 10, the method includes the following steps: S1001: A network device obtains pieces of system information corresponding to N coverage grades within a coverage area of a cell, where a coverage grade G_i corresponds to a piece of system information S_i in the pieces of system information.

S1002: The network device sends the pieces of system information over a target channel by using different sending parameters, where a sending parameter used to send the system information S_i is a physical-layer parameter and/or a higher-layer parameter that are/is used by the network device when user equipment belonging to the coverage grade G_i is enabled to reliably receive the system information S_i over the target channel;
where i and N are positive integers, and 1≤i≤N.

Optionally, the pieces of system information are sent by the network device in a time division multiplexing or frequency division multiplexing manner.

Optionally, the system information S_i is identical to or different from a piece of system information S_j.

The system information S_j is a piece of system information corresponding to any coverage grade Gj in the N coverage grades other than the coverage grade G_i, where 1≤j≤N, and i≠j. Optionally, when the system information S_i is different from the system information S_j,
the system information S_i includes a diff_i and a comm, where
the diff i is a piece of partial system information obtained by the network device for the coverage grade G_i; and
the comm is a piece of common-content partial system information for the system information S_i and the system information S_j.

Optionally, the sending the pieces of system information over a target channel by using different sending parameters includes:
in one system information sending process, sending M+1 pieces of partial system information including M pieces of partial system information of the N diff i's and the comm; where
the comm is sent over the target channel by using a first sending parameter, where the first sending parameter is a physical-layer parameter and/or a higher-layer parameter that are/is used by the network device when user equipment belonging to a coverage grade G_n is enabled to reliably receive the comm over the target channel;
the diff i is sent over the target channel by using a second sending parameter, where the second sending parameter is a physical-layer parameter and/or a higher-layer parameter that are/is used by the network device when the user equipment belonging to the coverage grade G_i is enabled to reliably receive the diff i over the target channel; and
M is a positive integer that is not greater than N; and among coverage grades corresponding to the M pieces of partial system information, receiving performance of the user equipment belonging to the coverage grade G_n is the poorest in the cell.

Optionally, the sending the pieces of system information over a target channel by using different sending parameters includes:
in L consecutive system information sending processes, completing sending the obtained pieces of system information corresponding to the N coverage grades within the coverage area of the cell, where L is a positive integer, and in the L consecutive system information sending processes, a smaller i indicates more times that the diff i is sent.

Optionally, the physical-layer parameter and/or the higher-layer parameter include/includes at least one of the following parameters:
a bandwidth, a frequency, a transmit power, a modulation and coding scheme MCS, a spreading factor SF, a quantity of repetitions, or a time length.

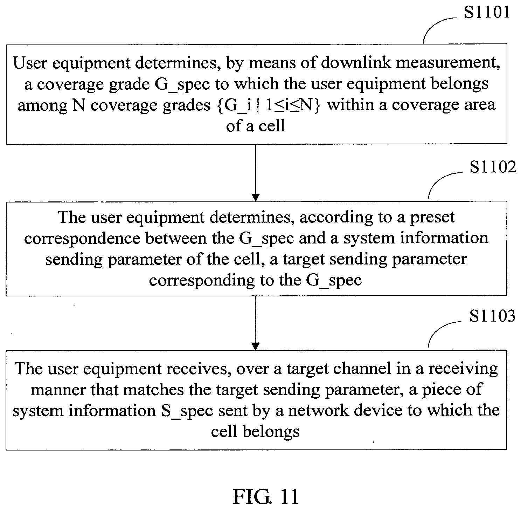

FIG. 11 is a flowchart of a system information receiving method according to an embodiment of the present invention. As shown in FIG. 11, the method includes the following steps:
S101: User equipment determines, by means of downlink measurement, a coverage grade G_spec to which the user equipment belongs among N coverage grades {G_i| 1≤i≤N}within a coverage area of a cell, where i is a positive integer, and N is an integer greater than 1.
S1102: The user equipment determines, according to a preset correspondence between the G_spec and a system information sending parameter of the cell, a target sending parameter corresponding to the G_spec.
S1103: The user equipment receives, over a target channel in a receiving manner that matches the target sending parameter, a piece of system information S_spec sent by a network device serving the cell.

The target sending parameter is a physical-layer parameter and/or a higher-layer parameter that are/is used by the network device when user equipment belonging to the coverage grade G_spec within the cell is enabled to reliably receive the system information S_spec over the target channel.

Optionally, the system information S_spec includes a diff_spec and a comm, where the diff_spec is a piece of partial system information sent by the network device for the coverage grade G_spec within the cell, and the comm is a piece of common-content partial system information that is sent by the network device to user equipments belonging to different coverage grades within the cell; and
the target sending parameter includes a first sending parameter and a second sending parameter, where the first sending parameter is a physical-layer parameter and/or a higher-layer parameter that are/is used when the network device sends the comm to the user equipment belonging to the coverage grade G_spec within the cell, and the second sending parameter is a physical-layer parameter and/or a higher-layer parameter that are/is used when the network device sends the diff_spec.

Optionally, the system information S_spec includes a diff_spec and a comm, where the diff_spec is a piece of partial system information sent by the network device for the coverage grade G_spec within the cell, and the comm is a piece of common-content partial system information that is sent by the network device to user equipments belonging to different coverage grades within the cell;
the target sending parameter includes a first sending parameter, where the first sending parameter is a physical-layer parameter and/or a higher-layer parameter that are/is used when the network device sends the comm to the user equipment belonging to the coverage grade G_spec within the cell; and
that the user equipment receives, over a target channel in a receiving manner that matches the target sending parameter, a piece of system information S_spec sent by a network device serving the cell specifically includes:
   the user equipment receives the comm over the target channel in a receiving manner that matches the first sending parameter;
   the user equipment obtains a second sending parameter carried by the comm, where the second sending parameter is a physical-layer parameter and/or a higher-layer parameter that are/is used when the network device sends the diff_spec within the cell; and
   the user equipment receives the diff_spec over the target channel in a receiving manner that matches the second sending parameter.

Optionally, that the user equipment receives, over a target channel in a receiving manner that matches the target sending parameter, a piece of system information S_spec sent by a network device serving the cell includes:
the user equipment determines a receipt instance receipt_instance_spec for the system information S_spec;
at a first time offset location in a system information receiving process corresponding to the determined receipt_instance_spec, the user equipment receives the comm over the target channel in the receiving manner that matches the first sending parameter; and
at a second time offset location in the system information receiving process corresponding to the determined receipt_instance_spec, the user equipment receives the diff_spec over the target channel in the receiving manner that matches the second sending parameter.

Optionally, that the user equipment receives, over a target channel in a receiving manner that matches the target sending parameter, a piece of system information S_spec sent by a network device serving the cell includes:
the user equipment determines a receipt instance receipt_instance_spec for the system information S_spec;
at a first frequency in a system information receiving process corresponding to the determined receipt_instance_spec, the user equipment receives the comm over the target channel in the receiving manner that matches the first sending parameter; and
at a second frequency in the system information receiving process corresponding to the determined receipt_instance_spec, the user equipment receives the diff_spec over the target channel in the receiving manner that matches the second sending parameter. Optionally, the physical-layer parameter and/or the higher-layer parameter include/includes at least one of the following parameters:
a bandwidth, a frequency, a transmit power, a modulation and coding scheme MCS, a spreading factor SF, or a quantity of repetitions.

To sum up, in the embodiments of the present invention, a network device uses different sending parameters for different coverage grades. This ensures receipt of pieces of system information by user equipments belonging to different coverage grades. Moreover, because different sending parameters are used for different coverage grades, occupation of a relatively large quantity of system resources is avoided when pieces of system information are sent according to a receiving requirement of user equipment whose receiving performance is the poorest in a cell.

Persons skilled in the art should understand that the embodiments of the present invention may be provided as a method, a system, or a computer program product. Therefore, the present invention may use a form of hardware-only embodiments, software-only embodiments, or embodiments with a combination of software and hardware. Moreover, the present invention may use a form of a computer program product that is implemented on one or more computer-usable storage media (including but not limited to a magnetic disk memory, a CD-ROM, an optical memory, and the like) that include computer-usable program code. The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams. Although embodiments of the present invention have been described, persons skilled in the art may make additional changes and modifications to these embodiments once learning about the basic inventive concepts.

Apparently, persons skilled in the art may make various modifications and variations to the present invention without departing from the scope of the present invention. The present invention is intended to cover these modifications and variations provided that they fall within the scope of protection defined by the following claims.

## Claims

1. A network device, comprising:
a processing module (601), configured to obtain pieces of system information corresponding to N coverage grades within a coverage area of a cell, wherein a coverage grade G_i corresponds to a piece of system information S_i in the pieces of system information, where the system information S_i is different from a piece of system information S_j, wherein
the system information S_j is a piece of system information corresponding to any coverage grade G_j in the N coverage grades other than the coverage grade G_i, 1≤j≤N, and i≠j, wherein a larger i indicates poorer receiving performance for a user equipment belonging to the coverage grade G_i; and
a sending module (602), configured to send the pieces of system information over a target channel by using different sending parameters, wherein a sending parameter used to send the system information S_i is a physical-layer parameter and/or a higher-layer parameter that are/is used by the sending module (602) when user equipment belonging to the coverage grade G_i is enabled to reliably receive the system information S_i over the target channel; wherein i and N are positive integers, and 1≤i≤N; **characterized in that**: the system information S_i comprises a diff_i and a comm, wherein:
the diff_i is a piece of partial system information obtained by the processing module (601) for the coverage grade G_i; and
the comm is a piece of common-content partial system information for the system information S_i and the system information S_j;
wherein the comm is sent over the target channel by using a first sending parameter, wherein the first sending parameter is a physical-layer parameter and/or a higher-layer parameter that are/is used by the sending module (602) when user equipment belonging to a coverage grade G_N is enabled to reliably receive the comm over the target channel;
the diff_i is sent over the target channel by using a second sending parameter, wherein the second sending parameter is a physical-layer parameter and/or a higher-layer parameter that are/is used by the sending module (602) when the user equipment belonging to the coverage grade G_i is enabled to reliably receive the diff_i over the target channel.

2. The network device according to claim 1, wherein the pieces of system information are sent by the sending module (602) in a time division multiplexing or frequency division multiplexing manner.

3. The network device according to claim 1, wherein the sending module (602) is specifically configured to:
in one system information sending process, send M+1 pieces of partial system information comprising M of the N diff_i's and the comm; wherein
the comm is sent over a target channel by using a first sending parameter being used when the user equipment belonging to a coverage grade G_n is enabled to reliably receive the comm over the target channel, and
M is a positive integer that is not greater than N; and among coverage grades corresponding to the M pieces of partial system information, receiving performance of the user equipment belonging to the coverage grade G_n is the poorest in the cell.

4. The network device according to claim 3, wherein the sending module (602) is specifically configured to:
in L consecutive system information sending processes, complete sending the pieces of system information obtained by the processing module (601) that are corresponding to the N coverage grades within the coverage area of the cell, wherein L is a positive integer, and in the L consecutive system information sending processes, a smaller i indicates more times that the diff_i is sent.

5. The network device according to claims 1 to 4, wherein the physical-layer parameter and/or the higher-layer parameter comprise/comprises at least one of the following parameters:
a bandwidth, a frequency, a transmit power, a modulation and coding scheme, MCS, a spreading factor, SF, a quantity of repetitions, or a time length.

6. User equipment, comprising:
a processing module (801), configured to: determine, by means of downlink measurement, a coverage grade G_spec to which the user equipment belongs among N coverage grades {G_i| 1≤i≤N} within a coverage area of a cell, wherein i is a positive integer, and N is an integer greater than 1, and a larger i indicates poorer receiving performance for a user equipment belonging to the coverage grade G_i; and determine, according to a preset correspondence between the G_spec and a system information sending parameter of the cell, a target sending parameter corresponding to the G_spec; and
a receiving module (802), configured to receive, over a target channel in a receiving manner that matches the target sending parameter, a piece of system information S_spec sent by a network device serving the cell, **characterized in that**: the system information S_spec comprises a diff_spec and a comm, wherein the diff_spec is a piece of partial system information sent by the network device for the coverage grade G_spec within the cell, and the comm is a piece of common-content partial system information that is sent by the network device to user equipments belonging to different coverage grades within the cell; and
the target sending parameter comprises a first sending parameter and a second sending parameter, wherein the first sending parameter is a physical-layer parameter and/or a higher-layer parameter that are/is used when the network device sends the comm to the user equipment belonging to the coverage grade G_N within the cell, and the second sending parameter is a physical-layer parameter and/or a higher-layer parameter that are/is used when the network device sends the diff_spec to a user equipment belonging to the coverage grade G_spec; wherein
the target sending parameter is a physical-layer parameter and/or a higher-layer parameter that are/is used by the network device when user equipment belonging to the coverage grade G_spec within the cell is enabled to reliably receive the system information S_spec over the target channel.

7. The user equipment according to claim 6, wherein:
the receiving module (802) is specifically configured to:
receive the comm over the target channel in a receiving manner that matches the first sending parameter;
obtain the second sending parameter which is carried by the comm, wherein the second sending parameter is a physical-layer parameter and/or a higher-layer parameter that are/is used when the network device sends the diff_spec within the cell; and
receive the diff_spec over the target channel in a receiving manner that matches the second sending parameter.

8. The user equipment according to claim 6 or 7, wherein the receiving module (802) is specifically configured to:
determine a receipt instance receipt_instance_spec for the system information S_spec;
at a first time offset location in a system information receiving process corresponding to the determined receipt_instance_spec, receive the comm over the target channel in the receiving manner that matches the first sending parameter; and
at a second time offset location in the system information receiving process corresponding to the determined receipt_instance_spec, receive the diff_spec over the target channel in the receiving manner that matches the second sending parameter.

9. The user equipment according to claim 6 or 7, wherein the receiving module (802) is specifically configured to:
determine a receipt instance receipt_instance_spec for the system information S_spec;
at a first frequency in a system information receiving process corresponding to the determined receipt_instance_spec, receive the comm over the target channel in the receiving manner that matches the first sending parameter; and
at a second frequency in the system information receiving process corresponding to the determined receipt_instance_spec, receive the diff_spec over the target channel in the receiving manner that matches the second sending parameter.

10. The user equipment according to any one of claims 6 to 9, wherein the physical-layer parameter and/or the higher-layer parameter comprise/comprises at least one of the following parameters:
a bandwidth, a frequency, a transmit power, a modulation and coding scheme, MCS, a spreading factor, SF, or a quantity of repetitions.

11. A system information sending method, comprising:
Obtaining (S1001), by a network device, pieces of system information corresponding to N coverage grades within a coverage area of a cell, wherein a coverage grade G_i corresponds to a piece of system information S_i in the pieces of system information, where the system information S_i is different from a piece of system information S_j, wherein
the system information S_j is a piece of system information corresponding to any coverage grade G_j in the N coverage grades other than the coverage grade G_i, 1≤j≤N, and i≠j, wherein a larger i indicates poorer receiving performance for a user equipment belonging to the coverage grade G_i; and
sending (S1002), by the network device, the pieces of system information over a target channel by using different sending parameters, wherein the sending parameter used to send the system information S_i is a physical-layer parameter and/or a higher-layer parameter that are/is used by the network device when user equipment belonging to the coverage grade G_i is enabled to reliably receive the system information S_i over the target channel; wherein
i and N are positive integers, and 1≤i≤N; **characterized in that**: the system information S_i comprises a diff_i and a comm, wherein:
the diff_i is a piece of partial system information obtained by the network device for the coverage grade G_i; and
the comm is a piece of common-content partial system information for the system information S_i and the system information S_j;
wherein the comm is sent over the target channel by using a first sending parameter, wherein the first sending parameter is a physical-layer parameter and/or a higher-layer parameter that are/is used by network device when user equipment belonging to a coverage grade G_N is enabled to reliably receive the comm over the target channel;
the diff i is sent over the target channel by using a second sending parameter, wherein the second sending parameter is a physical-layer parameter and/or a higher-layer parameter that are/is used by the network device when the user equipment belonging to the coverage grade G_i is enabled to reliably receive the diff_i over the target channel.

12. A system information receiving method, comprising:
Determining (S1101), by user equipment by means of downlink measurement, a coverage grade G_spec to which the user equipment belongs among N coverage grades {G_i | 1≤i≤N} within a coverage area of a cell, wherein i is a positive integer, and N is an integer greater than 1, and a larger i indicates poorer receiving performance for a user equipment belonging to the coverage grade G_i;
Determining (S1102), by the user equipment according to a preset correspondence between the G_spec and a system information sending parameter of the cell, a target sending parameter corresponding to the G_spec; and
Receiving (S1103), by the user equipment over a target channel in a receiving manner that matches the target sending parameter, a piece of system information S_spec sent by a network device serving the cell, **characterized in that**: the system information S_spec comprises a diff_spec and a comm, wherein the diff_spec is a piece of partial system information sent by the network device for the coverage grade G_spec within the cell, and the comm is a piece of common-content partial system information that is sent by the network device to user equipments belonging to different coverage grades within the cell; and
the target sending parameter comprises a first sending parameter and a second sending parameter, wherein the first sending parameter is a physical-layer parameter and/or a higher-layer parameter that are/is used when the network device sends the comm to the user equipment belonging to the coverage grade G_N within the cell, and the second sending parameter is a physical-layer parameter and/or a higher-layer parameter that are/is used when the network device sends the diff_spec to a user equipment belonging to the coverage grade G_spec; wherein
the target sending parameter is a physical-layer parameter and/or a higher-layer parameter that are/is used by the network device when user equipment belonging to the coverage grade G_spec within the cell is enabled to reliably receive the system information S_spec over the target channel.

## Patentansprüche

1. Netzwerkvorrichtung, umfassend:
ein Verarbeitungsmodul (601), das dazu ausgelegt ist, Systeminformationen zu erhalten, die N Abdeckungsstufen innerhalb eines Abdeckungsbereichs einer Zelle entsprechen, wobei eine Abdeckungsstufe G_i einer Systeminformation S_i in den Systeminformationen entspricht, wobei die Systeminformation S_i von einer Systeminformation S_j verschieden ist, wobei
die Systeminformation S_j eine Systeminformation ist, die einer beliebigen Abdeckungsstufe G_j in den N Abdeckungsstufen außer der Abdeckungsstufe G_i entspricht, 1≤j≤N und i≠j; wobei ein größerer Wert i eine schlechtere Empfangsleistung für ein Benutzergerät, das zu der Abdeckungsstufe G_i gehört, angibt; und
ein Sendemodul (602), das dazu ausgelegt ist, die Systeminformationen über einen Zielkanal durch Verwenden verschiedener Sendeparameter zu senden, wobei ein Sendeparameter, der zum Senden der Systeminformation S_i verwendet wird, ein Parameter der physikalischen Schicht und/oder ein Parameter einer höheren Schicht ist, der/die durch das Sendemodul (602) verwendet wird/werden, wenn ein Benutzergerät, das zu der Abdeckungsstufe G_i gehört, dazu befähigt ist, die Systeminformation S_i zuverlässig über den Zielkanal zu empfangen; wobei i und N positive Ganzzahlen sind und 1≤i≤N;
**dadurch gekennzeichnet, dass**:
die Systeminformation S_i eine diff_i und eine comm umfasst, wobei:
die diff i eine Teilsysteminformation ist, die durch das Verarbeitungsmodul (601) für die Abdeckungsstufe G_i erhalten wird; und
die comm eine Teilsysteminformation eines gemeinsamen Inhalts für die Systeminformation S_i und die Systeminformation S_j ist;
wobei die comm über den Zielkanal durch Verwenden eines ersten Sendeparameters gesendet wird, wobei der erste Sendeparameter ein Parameter der physikalischen Schicht und/oder ein Parameter einer höheren Schicht ist, der/die durch das Sendemodul (602) verwendet wird/werden, wenn ein Benutzergerät, das zu einer Abdeckungsstufe G_N gehört, dazu befähigt ist, die comm zuverlässig über den Zielkanal zu empfangen;
wobei die diff i über den Zielkanal durch Verwenden eines zweiten Sendeparameters gesendet wird, wobei der zweite Sendeparameter ein Parameter der physikalischen Schicht und/oder ein Parameter einer höheren Schicht ist, der/die durch das Sendemodul (602) verwendet wird/werden, wenn das Benutzergerät, das zu der Abdeckungsstufe G_i gehört, dazu befähigt ist, die diff_i zuverlässig über den Zielkanal zu empfangen.

2. Netzwerkvorrichtung nach Anspruch 1, wobei die Systeminformationen durch das Sendemodul (602) in einem Zeitmultiplex- oder Frequenzmultiplexverfahren gesendet werden.

3. Netzwerkvorrichtung nach Anspruch 1, wobei das Sendemodul (602) insbesondere ausgelegt ist zum:
in einem Systeminformationssendeprozess, Senden von M+1 Teilsysteminformationen, umfassend M der N diff is und die comm; wobei die comm über einen Zielkanal durch Verwenden eines ersten Sendeparameters gesendet wird, der verwendet wird, wenn das Benutzergerät, das zu einer Abdeckungsstufe G_n gehört, dazu befähigt ist, die comm zuverlässig über den Zielkanal zu empfangen, und M eine positive Ganzzahl ist, die nicht größer als N ist; und unter Abdeckungsstufen, die den M Teilsysteminformationen entsprechen, die Empfangsleistung des Benutzergeräts, das zu der Abdeckungsstufe G_n gehört, die schlechteste in der Zelle ist.

4. Netzwerkvorrichtung nach Anspruch 3, wobei das Sendemodul (602) insbesondere ausgelegt ist zum:
in L aufeinanderfolgenden Systeminformationssendeprozessen, Abschließen des Sendens der durch das Verarbeitungsmodul (601) erhaltenen Systeminformationen, die den N Abdeckungsstufen innerhalb des Abdeckungsbereichs der Zelle entsprechen, wobei L eine positive Ganzzahl ist und in den L aufeinanderfolgenden Systeminformationssendeprozessen ein kleinerer Wert i mehrere Male angibt, die die diff i gesendet wird.

5. Netzwerkvorrichtung nach Anspruch 1 bis 4, wobei der Parameter der physikalischen Schicht und/oder der Parameter einer höheren Schicht zumindest einen der folgenden Parameter umfasst/umfassen:
eine Bandbreite, eine Frequenz, eine Übertragungsleistung, ein Modulations- und Codierungsschema, MCS, einen Spreizfaktor, SF, eine Menge von Wiederholungen oder eine Zeitlänge.

6. Benutzergerät, umfassend:
ein Verarbeitungsmodul (801), das ausgelegt ist zum: Bestimmen, mittels einer Downlink-Messung, einer Abdeckungsstufe G_spec, zu der das Benutzergerät gehört, unter N Abdeckungsstufen {G_i | 1≤i≤N} innerhalb eines Abdeckungsbereichs einer Zelle, wobei i eine positive Ganzzahl ist und N eine Ganzzahl größer als 1 ist und ein größerer Wert i eine schlechtere Empfangsleistung für ein Benutzergerät, das zu der Abdeckungsstufe G_i gehört, angibt; und Bestimmen, gemäß einer vorgegebenen Übereinstimmung zwischen der G_spec und einem Systeminformationssendeparameter der Zelle, eines Zielsendeparameters, der der G spec entspricht; und
ein Empfangsmodul (802), das ausgelegt ist zum Empfangen, über einen Zielkanal in einer empfangenden Weise, die mit dem Zielsendeparameter übereinstimmt, einer Systeminformation S_spec, die durch eine Netzwerkvorrichtung gesendet wird, die die Zelle bedient, **dadurch gekennzeichnet, dass**:
die Systeminformation S_spec eine diff_spec und eine comm umfasst, wobei die diff_spec eine durch die Netzwerkvorrichtung gesendete Teilsysteminformation für die Abdeckungsstufe G spec innerhalb der Zelle ist und die comm eine Teilsysteminformation eines gemeinsamen Inhalts ist, die durch die Netzwerkvorrichtung an Benutzergeräte gesendet wird, die zu verschiedenen Abdeckungsstufen innerhalb der Zelle gehören; und
der Zielsendeparameter einen ersten Sendeparameter und einen zweiten Sendeparameter umfasst, wobei der erste Sendeparameter ein Parameter der physikalischen Schicht und/oder ein Parameter einer höheren Schicht ist, der/die verwendet wird/werden, wenn die Netzwerkvorrichtung die comm an das Benutzergerät sendet, das zu der Abdeckungsstufe G_N innerhalb der Zelle gehört, und der zweite Sendeparameter ein Parameter der physikalischen Schicht und/oder ein Parameter einer höheren Schicht ist, der/die verwendet wird/werden, wenn die Netzwerkvorrichtung die diff_spec an ein Benutzergerät sendet, das zu der Abdeckungsstufe G spec gehört; wobei
der Zielsendeparameter ein Parameter der physikalischen Schicht und/oder ein Parameter einer höheren Schicht ist, der/die durch die Netzwerkvorrichtung verwendet wird/werden, wenn das Benutzergerät, das zu der Abdeckungsstufe G_spec innerhalb der Zelle gehört, dazu befähigt ist, die Systeminformation S_spec zuverlässig über den Zielkanal zu empfangen.

7. Benutzergerät nach Anspruch 6, wobei:
das Empfangsmodul (802) insbesondere ausgelegt ist zum:
Empfangen der comm über den Zielkanal in einer empfangenden Weise, die mit dem ersten Sendeparameter übereinstimmt;
Erhalten des zweiten Sendeparameters, der durch die comm übertragen wird, wobei der zweite Sendeparameter ein Parameter der physikalischen Schicht und/oder ein Parameter einer höheren Schicht ist, der/die verwendet wird/werden, wenn die Netzwerkvorrichtung die diff_spec innerhalb der Zelle sendet; und
Empfangen der diff spec über den Zielkanal in einer empfangenden Weise, die mit dem zweiten Sendeparameter übereinstimmt.

8. Benutzergerät nach Anspruch 6 oder 7, wobei das Empfangsmodul (802) insbesondere ausgelegt ist zum:
Bestimmen einer Empfangsinstanz receipt_instance_spec für die Systeminformation S_spec;
an einer ersten Zeitversatzstelle in einem Systeminformationsempfangsprozess, der der bestimmten receipt_instance_spec entspricht, Empfangen der comm über den Zielkanal in der empfangenden Weise, die mit dem ersten Sendeparameter übereinstimmt; und
an einer zweiten Zeitversatzstelle in dem Systeminformationsempfangsprozess, der der bestimmten receipt _instance_spec entspricht, Empfangen der diff spec über den Zielkanal in der empfangenden Weise, die mit dem zweiten Sendeparameter übereinstimmt.

9. Benutzergerät nach Anspruch 6 oder 7, wobei das Empfangsmodul (802) insbesondere ausgelegt ist zum:
Bestimmen einer Empfangsinstanz receipt _instance_spec für die Systeminformation S_spec;
in einer ersten Frequenz in einem Systeminformationsempfangsprozess, der der bestimmten receipt _instance_spec entspricht, Empfangen der comm über den Zielkanal in der empfangenden Weise, die mit dem ersten Sendeparameter übereinstimmt; und
in einer zweiten Frequenz in dem Systeminformationsempfangsprozess, der der bestimmten receipt _instance_spec entspricht, Empfangen der diff spec über den Zielkanal in der empfangenden Weise, die mit dem zweiten Sendeparameter übereinstimmt.

10. Benutzergerät nach einem der Ansprüche 6 bis 9, wobei der Parameter der physikalischen Schicht und/oder der Parameter einer höheren Schicht zumindest einen der folgenden Parameter umfasst/umfassen:
eine Bandbreite, eine Frequenz, eine Übertragungsleistung, ein Modulations- und Codierungsschema, MCS, einen Spreizfaktor, SF, oder eine Menge von Wiederholungen.

11. Systeminformationssendeprozess, umfassend:
Erhalten (S1001), durch eine Netzwerkvorrichtung, von Systeminformationen, die N Abdeckungsstufen innerhalb eines Abdeckungsbereichs einer Zelle entsprechen, wobei eine Abdeckungsstufe G_i einer Systeminformation S_i in den Systeminformationen entspricht, wobei die Systeminformation S_i von einer Systeminformation S_j verschieden ist, wobei
die Systeminformation S_j eine Systeminformation ist, die einer beliebigen Abdeckungsstufe G_j in den N Abdeckungsstufen außer der Abdeckungsstufe G_i entspricht, 1≤j≤N und i≠j, wobei ein größerer Wert i eine schlechtere Empfangsleistung für ein Benutzergerät, das zu der Abdeckungsstufe G_i gehört, angibt; und
Senden (S1002), durch die Netzwerkvorrichtung, der Systeminformationen über einen Zielkanal durch Verwenden verschiedener Sendeparameter, wobei der Sendeparameter, der zum Senden der Systeminformation S_i verwendet wird, ein Parameter der physikalischen Schicht und/oder ein Parameter einer höheren Schicht ist, der/die durch die Netzwerkvorrichtung verwendet wird/werden, wenn ein Benutzergerät, das zu der Abdeckungsstufe G_i gehört, dazu befähigt ist, die Systeminformation S_i zuverlässig über den Zielkanal zu empfangen; wobei i und N positive Ganzzahlen sind und 1≤i≤N;
**dadurch gekennzeichnet, dass**:
die Systeminformation S_i eine diff_i und eine comm umfasst, wobei:
die diff i eine Teilsysteminformation ist, die durch die Netzwerkvorrichtung für die Abdeckungsstufe G_i erhalten wird; und
die comm eine Teilsysteminformation eines gemeinsamen Inhalts für die Systeminformation S_i und die Systeminformation S_j ist;
wobei die comm über den Zielkanal durch Verwenden eines ersten Sendeparameters gesendet wird, wobei der erste Sendeparameter ein Parameter der physikalischen Schicht und/oder ein Parameter einer höheren Schicht ist, der/die durch die Netzwerkvorrichtung verwendet wird/werden, wenn ein Benutzergerät, das zu einer Abdeckungsstufe G_N gehört, dazu befähigt ist, die comm zuverlässig über den Zielkanal zu empfangen;
wobei die diff_i über den Zielkanal durch Verwenden eines zweiten Sendeparameters gesendet wird, wobei der zweite Sendeparameter ein Parameter der physikalischen Schicht und/oder ein Parameter einer höheren Schicht ist, der/die durch die Netzwerkvorrichtung verwendet wird/werden, wenn das Benutzergerät, das zu der Abdeckungsstufe G_i gehört, dazu befähigt ist, die diff i zuverlässig über den Zielkanal zu empfangen.

12. Systeminformationsempfangsprozess, umfassend:
Bestimmen (S1101), durch ein Benutzergerät mittels einer Downlink-Messung, einer Abdeckungsstufe G_spec, zu der das Benutzergerät gehört, unter N Abdeckungsstufen {G_i |11≤i≤N} innerhalb eines Abdeckungsbereichs einer Zelle, wobei i eine positive Ganzzahl ist und N eine Ganzzahl größer als 1 ist und ein größerer Wert i eine schlechtere Empfangsleistung für ein Benutzergerät, das zu der Abdeckungsstufe G_i gehört, angibt;
Bestimmen (S1102), durch das Benutzergerät gemäß einer vorgegebenen Übereinstimmung zwischen der G_spec und einem Systeminformationssendeparameter der Zelle, eines Zielsendeparameters, der der G spec entspricht; und
Empfangen (S1103), durch das Benutzergerät über einen Zielkanal in einer empfangenden Weise, die mit dem Zielsendeparameter übereinstimmt, einer Systeminformation S_spec, die durch eine Netzwerkvorrichtung gesendet wird, die die Zelle bedient, **dadurch gekennzeichnet, dass**:
die Systeminformation S_spec eine diff_spec und eine comm umfasst, wobei die diff_spec eine durch die Netzwerkvorrichtung gesendete Teilsysteminformation für die Abdeckungsstufe G spec innerhalb der Zelle ist und die comm eine Teilsysteminformation eines gemeinsamen Inhalts ist, die durch die Netzwerkvorrichtung an Benutzergeräte gesendet wird, die zu verschiedenen Abdeckungsstufen innerhalb der Zelle gehören; und
der Zielsendeparameter einen ersten Sendeparameter und einen zweiten Sendeparameter umfasst, wobei der erste Sendeparameter ein Parameter der physikalischen Schicht und/oder ein Parameter einer höheren Schicht ist, der/die verwendet wird/werden, wenn die Netzwerkvorrichtung die comm an das Benutzergerät sendet, das zu der Abdeckungsstufe G_N innerhalb der Zelle gehört, und der zweite Sendeparameter ein Parameter der physikalischen Schicht und/oder ein Parameter einer höheren Schicht ist, der/die verwendet wird/werden, wenn die Netzwerkvorrichtung die diff_spec an ein Benutzergerät sendet, das zu der Abdeckungsstufe G_spec gehört; wobei
der Zielsendeparameter ein Parameter der physikalischen Schicht und/oder ein Parameter einer höheren Schicht ist, der/die durch die Netzwerkvorrichtung verwendet wird/werden, wenn das Benutzergerät, das zu der Abdeckungsstufe G_spec innerhalb der Zelle gehört, dazu befähigt ist, die Systeminformation S_spec zuverlässig über den Zielkanal zu empfangen.

## Revendications

1. Dispositif de réseau, comprenant :
un module de traitement (601), configuré pour obtenir des morceaux d'information système correspondant à N grades de couverture à l'intérieur d'une zone de couverture d'une cellule, un grade de couverture G_i correspondant à un morceau d'information système S_i des morceaux d'information, l'information système S_i étant différente d'un morceau d'information système S_j, dans lequel l'information système S_j est un morceau d'information système correspondant à n'importe quel grade de couverture G_j des N grades de couverture autre que le grade de couverture G_i, 1 ≤ j ≤ N, et i ≠ j, dans lequel
plus i est élevé, plus les performances de réception sont médiocres pour un équipement d'utilisateur appartenant au grade de couverture G_i ; et
un module d'envoi (602), configuré pour envoyer les morceaux d'information système sur un canal cible au moyen de différents paramètres d'envoi, un paramètre d'envoi utilisé pour envoyer l'information système S_i étant un paramètre de couche physique et/ou un paramètre de couche plus haute qui sont/est utilisé(s) par le module d'envoi (602) lorsqu'un équipement d'utilisateur appartenant au grade de couverture G_i est activé pour recevoir l'information système S_i de façon fiable sur le canal cible ; où i et N sont des entiers positifs, et 1 ≤ i ≤ N ;
**caractérisé en ce que** :
l'information système S_i comprend un diff_i et un comm, où :
le diff_i est un morceau d'information système partielle obtenu par le module de traitement (601) pour le grade de couverture G_i ; et
le comm est un morceau d'information système partielle à contenu commun concernant l'information système S_i et l'information système S_j ;
dans lequel le comm est envoyé sur le canal cible au moyen d'un premier paramètre d'envoi, le premier paramètre d'envoi étant un paramètre de couche physique et/ou un paramètre de couche plus haute qui sont/est utilisé(s) par le module d'envoi (602) lorsqu'un équipement d'utilisateur appartenant à un grade de couverture G_N est activé pour recevoir le comm de façon fiable sur le canal cible ;
le diff_i est envoyé sur le canal cible au moyen d'un deuxième paramètre d'envoi, le deuxième paramètre d'envoi étant un paramètre de couche physique et/ou un paramètre de couche plus haute qui sont/est utilisé(s) par le module d'envoi (602) lorsque l'équipement d'utilisateur appartenant au grade de couverture G_i est activé pour recevoir le diff_i de façon fiable sur le canal cible.

2. Dispositif de réseau selon la revendication 1, dans lequel les morceaux d'information système sont envoyés par le module d'envoi (602) dans un mode de multiplexage par répartition dans le temps ou de multiplexage par répartition en fréquence.

3. Dispositif de réseau selon la revendication 1, dans lequel le module d'envoi (602) est spécifiquement configuré pour :
dans un processus d'envoi d'informations système, envoyer M+1 morceaux d'information système partielle contenant M des N diff_i et le comm ; dans lequel le comm est envoyé sur un canal cible au moyen d'un premier paramètre d'envoi qui est utilisé lorsque l'équipement d'utilisateur appartenant à un grade de couverture G_n est activé pour recevoir le comm de façon fiable sur le canal cible, et
M est un entier positif qui n'est pas supérieur à N ; et parmi les grades de couverture correspondant aux M morceaux d'information système partielle, les performances de réception de l'équipement d'utilisateur appartenant au grade de couverture G_n sont les plus médiocres de la cellule.

4. Dispositif de réseau selon la revendication 3, dans lequel le module d'envoi (602) est spécifiquement configuré pour :
dans L processus d'envoi d'informations système consécutifs, effectuer l'envoi des morceaux d'information système obtenus par le module de traitement (601) qui correspondent aux N grades de couverture à l'intérieur de la zone de couverture de la cellule, où L est un entier positif, et dans les L processus d'envoi d'informations système consécutifs, plus i est petit, plus le nombre d'envois du diff_i est élevé.

5. Dispositif de réseau selon les revendications 1 à 4, dans lequel le paramètre de couche physique et/ou le paramètre de couche plus haute contiennent/contient au moins un des paramètres suivants :
une largeur de bande, une fréquence, une puissance d'émission, un schéma de modulation et de codage, MCS, un facteur d'étalement, SF, une quantité de répétitions, et une longueur de temps.

6. Équipement d'utilisateur, comprenant :
un module de traitement (801), configuré pour : déterminer, au moyen d'une mesure de liaison descendante, un grade de couverture G spec auquel l'équipement d'utilisateur appartient parmi N grades de couverture {G_i | 1 ≤ i ≤ N} à l'intérieur d'une zone de couverture d'une cellule, i étant un entier positif, et N étant un entier supérieur à 1, et plus i est élevé, plus les performances de réception sont médiocres pour un équipement d'utilisateur appartenant au grade de couverture G_i ;
et déterminer, selon une correspondance prédéfinie entre le G_spec et un paramètre d'envoi d'informations système de la cellule, un paramètre d'envoi cible correspondant au G spec ; et
un module de réception (802), configuré pour recevoir, sur un canal cible dans un mode de réception qui correspond au paramètre d'envoi cible, un morceau d'information système S_spec envoyé par un dispositif de réseau desservant la cellule, **caractérisé en ce que** :
l'information système S_spec comprend un diff_spec
et un comm, le diff_spec étant un morceau d'information système partielle obtenu par le dispositif de réseau pour le grade de couverture G_spec à l'intérieur de la cellule, et le comm étant un morceau d'information système partielle à contenu commun qui est envoyé par le dispositif de réseau à des équipements d'utilisateur appartenant à différents grades de couverture à l'intérieur de la cellule ; et
le paramètre d'envoi cible comprend un premier paramètre d'envoi et un deuxième paramètre d'envoi, le premier paramètre d'envoi étant un paramètre de couche physique et/ou un paramètre de couche plus haute qui sont/est utilisé(s) lorsque le dispositif de réseau envoie le comm à l'équipement d'utilisateur appartenant au grade de couverture G_N à l'intérieur de la cellule, et le deuxième paramètre d'envoi étant un paramètre de couche physique et/ou un paramètre de couche plus haute qui sont/est utilisé(s) lorsque le dispositif de réseau envoie le diff_spec à un équipement d'utilisateur appartenant au grade de couverture G spec ; dans lequel
le paramètre d'envoi cible est un paramètre de couche physique et/ou un paramètre de couche plus haute qui sont/est utilisé(s) par le dispositif de réseau lorsque l'équipement d'utilisateur appartenant au grade de couverture G spec à l'intérieur de la cellule est activé pour recevoir l'information système S_spec de façon fiable sur le canal cible.

7. Équipement d'utilisateur selon la revendication 6, dans lequel :
le module de réception (802) est spécifiquement configuré pour :
recevoir le comm sur le canal cible dans un mode de réception qui correspond au premier paramètre d'envoi ;
obtenir le deuxième paramètre d'envoi qui est transporté par le comm, le deuxième paramètre d'envoi étant un paramètre de couche physique et/ou un paramètre de couche plus haute qui sont/est utilisé(s) lorsque le dispositif de réseau envoie le diff_spec à l'intérieur de la cellule ; et
recevoir le diff_spec sur le canal cible dans un mode de réception qui correspond au deuxième paramètre d'envoi.

8. Équipement d'utilisateur selon la revendication 6 ou 7, dans lequel le module de réception (802) est spécifiquement configuré pour :
déterminer une instance de réception receipt_instance_spec pour l'information système S_spec ;
au niveau d'un premier emplacement de décalage de temps dans un processus de réception d'informations système correspondant à la receipt_instance_spec déterminée, recevoir le comm sur le canal cible dans le mode de réception qui correspond au premier paramètre d'envoi ; et
au niveau d'un deuxième emplacement de décalage de temps dans le processus de réception d'informations système correspondant à la receipt_instance_spec déterminée, recevoir le diff_spec sur le canal cible dans le mode de réception qui correspond au deuxième paramètre d'envoi.

9. Équipement d'utilisateur selon la revendication 6 ou 7, dans lequel le module de réception (802) est spécifiquement configuré pour :
déterminer une instance de réception receipt _instance_spec pour l'information système S_spec ;
à une première fréquence dans un processus de réception d'informations système correspondant à la receipt _instance_spec déterminée, recevoir le comm sur le canal cible dans le mode de réception qui correspond au premier paramètre d'envoi ; et
à une deuxième fréquence dans le processus de réception d'informations système correspondant à la receipt _instance_spec déterminée, recevoir le diff_spec sur le canal cible dans le mode de réception qui correspond au deuxième paramètre d'envoi.

10. Équipement d'utilisateur selon l'une quelconque des revendications 6 à 9, dans lequel le paramètre de couche physique et/ou le paramètre de couche plus haute contiennent/contient au moins un des paramètres suivants :
une largeur de bande, une fréquence, une puissance d'émission, un schéma de modulation et de codage, MCS, un facteur d'étalement, SF, et une quantité de répétitions.

11. Procédé d'envoi d'informations système, comprenant les étapes consistant à :
obtenir (S1001), par un dispositif de réseau, des morceaux d'information système correspondant à N grades de couverture à l'intérieur d'une zone de couverture d'une cellule, un grade de couverture G_i correspondant à un morceau d'information système S_i des morceaux d'information système, l'information système S_i étant différente d'un morceau d'information système S_j, dans lequel l'information système S_j est un morceau d'information système correspondant à n'importe quel grade de couverture G_j des N grades de couverture autre que le grade de couverture G_i, 1 ≤ j ≤ N, et i ≠ j, dans lequel plus i est élevé, plus les performances de réception sont médiocres pour un équipement d'utilisateur appartenant au grade de couverture G_i ; et
envoyer (S1002), par le dispositif de réseau, les morceaux d'information système sur un canal cible au moyen de différents paramètres d'envoi, le paramètre d'envoi utilisé pour envoyer l'information système S_i étant un paramètre de couche physique et/ou un paramètre de couche plus haute qui sont/est utilisé(s) par le dispositif de réseau lorsqu'un équipement d'utilisateur appartenant au grade de couverture G_i est activé pour recevoir l'information système S_i de façon fiable sur le canal cible ; où
i et N sont des entiers positifs, et 1 ≤ i ≤ N ;
**caractérisé en ce que** :
l'information système S_i comprend un diff_i et un comm, où :
le diff_i est un morceau d'information système partielle obtenu par le dispositif de réseau pour le grade de couverture G_i ; et
le comm est un morceau d'information système partielle à contenu commun concernant l'information système S_i et l'information système S_j ;
dans lequel le comm est envoyé sur le canal cible au moyen d'un premier paramètre d'envoi, le premier paramètre d'envoi étant un paramètre de couche physique et/ou un paramètre de couche plus haute qui sont/est utilisé(s) par le dispositif de réseau lorsqu'un équipement d'utilisateur appartenant à un grade de couverture G_N est activé pour recevoir le comm de façon fiable sur le canal cible ;
le diff_i est envoyé sur le canal cible au moyen d'un deuxième paramètre d'envoi, le deuxième paramètre d'envoi étant un paramètre de couche physique et/ou un paramètre de couche plus haute qui sont/est utilisé(s) par le dispositif de réseau lorsque l'équipement d'utilisateur appartenant au grade de couverture G_i est activé pour recevoir le diff_i de façon fiable sur le canal cible.

12. Procédé de réception d'informations système, comprenant les étapes consistant à :
déterminer (S1101), par un équipement d'utilisateur au moyen d'une mesure de liaison descendante, un grade de couverture G_spec auquel l'équipement d'utilisateur appartient parmi N grades de couverture {G_i | 1 ≤ i ≤ N} à l'intérieur d'une zone de couverture d'une cellule, i étant un entier positif, et N étant un entier supérieur à 1, et plus i est élevé, plus les performances de réception sont médiocres pour un équipement d'utilisateur appartenant au grade de couverture G_i ;
déterminer (S1102), par l'équipement d'utilisateur selon une correspondance prédéfinie entre le G_spec et un paramètre d'envoi d'informations système de la cellule, un paramètre d'envoi cible correspondant au G spec ; et
recevoir (S1103), par l'équipement d'utilisateur sur un canal cible dans un mode de réception qui correspond au paramètre d'envoi cible, un morceau d'information système S_spec envoyé par un dispositif de réseau desservant la cellule, **caractérisé en ce que** :
l'information système S_spec comprend un diff_spec et un comm, le diff_spec étant un morceau d'information système partielle envoyé par le dispositif de réseau pour le grade de couverture G_spec à l'intérieur de la cellule, et le comm étant un morceau d'information système partielle à contenu commun qui est envoyé par le dispositif de réseau à des équipements d'utilisateur appartenant à différents grades de couverture à l'intérieur de la cellule ; et
le paramètre d'envoi cible comprend un premier paramètre d'envoi et un deuxième paramètre d'envoi, le premier paramètre d'envoi étant un paramètre de couche physique et/ou un paramètre de couche plus haute qui sont/est utilisé(s) lorsque le dispositif de réseau envoie le comm à l'équipement d'utilisateur appartenant au grade de couverture G_N à l'intérieur de la cellule, et le deuxième paramètre d'envoi étant un paramètre de couche physique et/ou un paramètre de couche plus haute qui sont/est utilisé(s) lorsque le dispositif de réseau envoie le diff_spec à un équipement d'utilisateur appartenant au grade de couverture G spec ; dans lequel
le paramètre d'envoi cible est un paramètre de couche physique et/ou un paramètre de couche plus haute qui sont/est utilisé(s) par le dispositif de réseau lorsque l'équipement d'utilisateur appartenant au grade de couverture G_spec est activé pour recevoir l'information système S_spec de façon fiable sur le canal cible.
